# FASCICULE DE BREVET EUROPEEN

(11) **EP 3 225 052 B1**
(45) Date de publication et mention de la délivrance du brevet: **07.11.2018**
(21) Numéro de dépôt: 15808743.7
(22) Date de dépôt: 26.11.2015
(51) Int. Cl.: H04W 40/24, H04W 84/18

(54) **PROCEDE D'AFFILIATION A UNE GRAPPE DE DISPOSITIFS ELECTRONIQUES COMMUNIQUANT VIA UN RESEAU SANS FIL, DISPOSITIF ELECTRONIQUE METTANT EN OEUVRE LEDIT PROCEDE ET SYSTEME ASSOCIES**
VERFAHREN ZUR VERBINDUNG EINER ÜBER EIN DRAHTLOSES NETZWERK KOMMUNIZIERENDEN GRUPPE VON ELEKTRONISCHEN VORRICHTUNGEN, ZUGEHÖRIGE ELEKTRONISCHE VORRICHTUNG ZUR IMPLEMENTIERUNG DES BESAGTEN VERFAHRENS UND SYSTEM
METHOD FOR AFFILIATING A CLUSTER OF ELECTRONIC DEVICES COMMUNICATING VIA A WIRELESS NETWORK, ASSOCIATED ELECTRONIC DEVICE IMPLEMENTING SAID METHOD AND SYSTEM

(30) Priorité: 27.11.2014 FR 1461609
(43) Date de publication de la demande: 04.10.2017
(73) Titulaire: Traxens, 13013 Marseille (FR); Institut National de Recherche en Informatique et en Automatique, 78150 Le Chesnay (FR)
(72) Inventeur: DARAGON, Pascal, 13850 Greasque (FR); GUZZO, Natale, 13001 Marseille (FR); NANDAGOBAN, Arulnambi, 13008 Marseille (FR); MITTON, Nathalie, 59650 Villeneuve D'ascq (FR)
(74) Mandataire: Brun, Philippe Alexandre Georges
(86) Numéro de dépôt international: PCT/FR2015/053222
(87) Numéro de publication internationale: WO 2016/083745

(56) Documents cités:
- Natale Guzzo ET AL: "A Cluster-based and On-demand routing algorithm for Large-Scale Multi-hop Wireless Sensor Networks", , 22 septembre 2014 (2014-09-22), XP055213614, Extrait de l'Internet: URL:https://hal.inria.fr/hal-01057738/docu ment [extrait le 2015-09-16]
- Wittawat Tantisiriroj ET AL: "The Cluster Protocol", , 31 janvier 2008 (2008-01-31), XP055213609, Extrait de l'Internet: URL:http://www.comm.utoronto.ca/hypercast/ material/CT_mechanism_2008_01_30.pdf [extrait le 2015-09-16]
- W.R. HEINZELMAN ET AL: "Energy-efficient communication protocol for wireless microsensor networks", PROCEEDINGS OF THE 33RD ANNUAL HAWAII INTERNATIONAL CONFERENCE ON SYSTEM SCIENCES, 4 janvier 2000 (2000-01-04), page 10, XP055158497, DOI: 10.1109/HICSS.2000.926982 ISBN: 978-0-76-950493-3

## Description

### Domaine technique et état de la technique

L'invention concerne un procédé d'affiliation à une grappe de dispositifs électroniques communicants, ledit procédé étant mis en oeuvre par une unité de traitement de l'un desdits dispositifs électroniques communiquant avec des pairs au travers d'un réseau de communication sans fil.

L'invention concerne en outre un système comportant une pluralité de dispositifs mettant en oeuvre un tel procédé d'affiliation.

A titre d'exemple d'application préférée mais non limitatif, l'invention est décrite au travers d'un exemple d'application relatif à la collecte de grandeurs, telles que, par exemple, une température, un taux d'humidité, une intensité lumineuse, une fréquence de vibration, un choc, etc., en lien avec les environnements interne et/ou externe de containers de biens ou de marchandises ou plus généralement de conteneurs. Selon ledit exemple d'application, lesdits conteneurs sont agglomérés et/ou empilés sur une aire de stockage ou encore itinérants sur une plateforme de transport telle qu'un navire porte-conteneurs, un train de marchandises ou toute autre plateforme de transport adaptée. Chaque conteneur coopère avec l'un desdits dispositifs communicants. Ces derniers sont chargés de collecter et d'acheminer lesdites grandeurs au travers de messages de service à destination de dispositifs pairs agissant en tant que « têtes de grappe » ou « heads » selon une terminologie anglo-saxonne. L'une des missions d'un head consiste à mettre en oeuvre un service déterminé. Un tel service peut, par exemple, consister à agréger des données collectées par les dispositifs communicants et à transmettre lesdites données, après leur agrégation, à une entité distante, au moyen d'une liaison longue portée ou longue distance de type liaison satellite ou liaison radiotéléphonique. L'invention ne saurait toutefois être limitée à ce seul exemple d'application. Plus généralement, un dispositif « tête de grappe » est chargé de mettre en oeuvre un service donné en lien avec des données collectées et acheminées par ses pairs, ledit service donné pouvant concerner une supervision ou une gestion d'alarmes, en lieu et place ou en complément d'une communication avec une entité distante.

Natale Guzzo ET AL: "A Cluster-based and On-demand routing algorithm for Large-Scale Multi-hop Wireless Sensor Networks", 22 septembre 2014 ainsi que Wittawat Tantisiriroj ET AL: "The Cluster Protocol", 31 janvier 2008, fournissent des enseignements utiles à la compréhension de l'invention, telle que définie par les revendications.

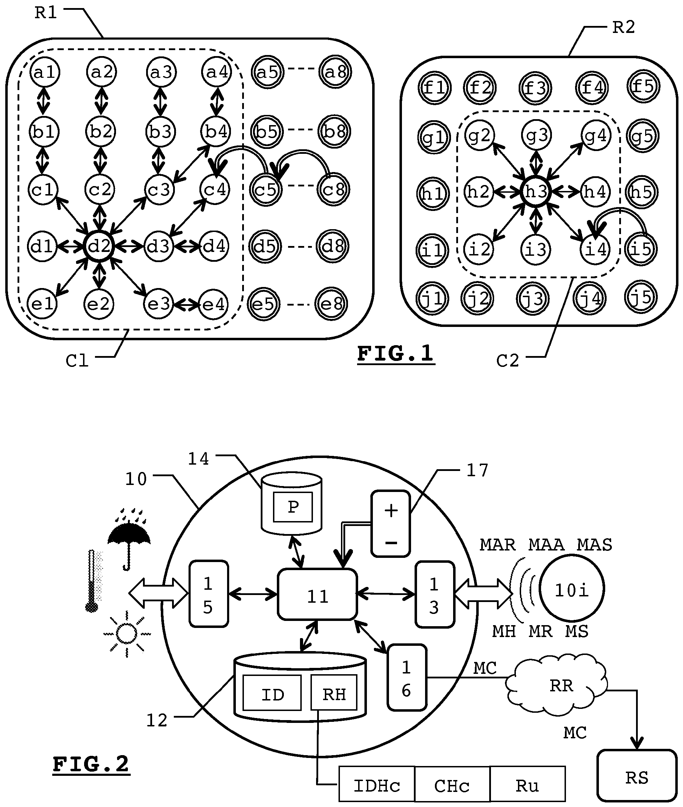

De nombreuses typologies ou configurations de réseaux d'objets communicants existent de nos jours. La figure 1 présente ainsi schématiquement deux exemples de réseaux R1 et R2 de communication sans fil. Quel que soit le réseau opéré, chaque dispositif communicant, que l'on nomme également et généralement « noeud » au sein d'un tel réseau, met en oeuvre un procédé de communication lui permettant d'échanger des messages de données et/ou de service avec un noeud tiers ou pair. Ainsi, le réseau R1 met en situation quarante dispositifs électroniques communicants respectivement référencés en figure 1, a1 à a8, b1 à b8, c1 à c8, d1 à d8 et e1 à e8. De son côté, le réseau R2 met en situation vingt-cinq dispositifs électroniques communicants, respectivement référencés en figure 1, f1 à f5, g1 à g5, h1 à h5, il à i5 et j1 à j5.

Que l'on exploite un réseau simple-saut (ou « single-hop network » selon une terminologie anglo-saxonne), tel que, à titre d'exemple, le réseau R2 décrit en liaison avec la figure 1, ou multi-sauts (ou « multi-hop network » selon une terminologie anglo-saxonne) tel que, à titre d'exemple, le réseau R1 décrit en liaison avec la figure 1, un premier noeud que nous nommerons noeud « source », peut préparer un message de service, représenté en figure 1 par une double flèche en trait simple, comportant des données en lien avec, à titre d'exemple non limitatif, une grandeur mesurée par un capteur coopérant avec ledit premier noeud, à destination d'un deuxième noeud « destinataire ».

Selon un réseau simple-saut, la communication entre les premier et deuxième noeuds est directe. En revanche, selon un réseau multi-sauts, une telle communication peut être indirecte. Ainsi, un message adressé depuis un noeud source peut être relayé par un ou plusieurs noeuds « relayeurs ou intermédiaires », dont les rôles respectifs consistent à réémettre ledit message émanant du noeud source afin que celui-ci soit in fine acheminé vers le noeud destinataire et réceptionné par ce dernier. Les noeuds sources, pouvant communiquer directement ou indirectement avec un noeud head, constituent des « grappes » ou des « clusters », selon une terminologie anglo-saxonne, telles que, à titre d'exemple les grappes C1 et C2 représentées par un cerclage en ligne pointillée par la figure 1. Le cheminement suivant lequel un message de service émanant d'un premier noeud source à destination d'un deuxième noeud destinataire via un ou plusieurs noeuds relayeurs est nommé généralement « route ». Ainsi, selon la figure 1, un message émis depuis le noeud a4 à destination du noeud d2, sera relayé successivement par les noeuds relayeurs b4 et c3.

La communication au sein de réseaux de communication simple-saut ou multi-sauts est généralement réalisée par voie radio. Une telle communication est généralement de faible portée, c'est-à-dire de l'ordre de quelques mètres à quelques dizaines de mètres, de sorte que, de proche en proche, les messages de service soient transmis entre les différents noeuds. Lorsque des données sont supposées être acheminées à destination d'un serveur ou plus généralement d'une entité distante, un deuxième mode de communication est mis en oeuvre, par exemple, par voie GSM (« Global System for Mobile Communications » selon une terminologie anglo-saxonne) ou GPRS (« General Packet Radio Service » selon une terminologie anglo-saxonne), voire encore par une liaison satellite.

Les échanges entre noeuds, des traitements ou calculs mis en oeuvre par ces derniers basés sur des données échangées, ainsi que l'acheminement éventuel et distant de données collectées au sein d'un réseau ou d'une grappe de dispositifs communicants, sont autant d'actions consommatrices en énergie électrique.

Comme l'indique à titre d'exemple préféré la figure 2, un noeud consiste généralement et principalement en un dispositif électronique 10 comportant une unité de traitement 11, par exemple sous la forme d'un microcontrôleur, coopérant avec une mémoire de données 12, éventuellement une mémoire de programmes 14, lesdites mémoires pouvant être éventuellement dissociées. L'unité de traitement 11 coopère avec lesdites mémoires 12 et 14 au moyen de bus de communication internes. Un dispositif électronique 10 comporte généralement un ou plusieurs capteurs de mesure 15 d'une grandeur physique en lien avec l'environnement du dispositif 10. Un tel capteur peut mesurer la température environnante, un taux d'humidité ou la présence et/ou l'absence de lumière. Le dispositif 10 comporte en outre des premiers moyens de communication 13 coopérant avec l'unité de traitement 11 et assurant une communication de proximité sans fil avec tout autre dispositif électronique 10i situé à portée de communication. Il peut également comporter des deuxièmes moyens de communication 16 de type « longue distance » coopérant également avec l'unité de traitement 11. Ces deuxièmes moyens de communication permettent à un tel dispositif 10 de pouvoir transmettre à une entité distante, par exemple un serveur RS, des données au travers de messages MC distribués par un réseau RR exploitant par exemple les technologies GSM, GPRS ou satellite. Pour fonctionner, c'est-à-dire pour que l'unité de traitement 11 mette en oeuvre un procédé découlant de l'interprétation ou de l'exécution, par ladite unité de traitement, d'instructions de programme P enregistrées dans la mémoire de programmes 14, le dispositif 10 comporte une source d'énergie électrique 17, sous la forme d'une ou plusieurs batteries par exemple. La capacité à pouvoir communiquer ou tout simplement à pouvoir fonctionner d'un noeud est directement liée à la capacité énergétique restante et disponible dudit noeud.

Certains opérateurs ont cherché à concevoir des réseaux ou des procédés de communication, mis en oeuvre par des noeuds au sein d'un réseau ou d'une grappe, pour préserver globalement la capacité en énergie électrique du réseau ou de la grappe. Globalement, une première approche consiste à répartir le coût énergétique découlant des échanges entre les noeuds sur l'ensemble desdits noeuds du réseau ou de la grappe. Une deuxième approche consiste à répartir la consommation énergétique découlant des traitements mis en oeuvre sur des données collectées, par exemple une émission longue distance, sur la plupart des noeuds, mutualisant ainsi la consommation électrique sur une pluralité de noeuds. Ainsi, que le réseau de communication sans contact soit en configuration simple-saut ou multi-sauts, un noeud peut être arbitrairement désigné ou promu en tant que noeud « tête de réseau » ou du moins en tant que tête de grappe, soit un noeud head. En liaison avec la figure 1, un dispositif agissant en tant que head est représenté par un cercle dessiné en trait épais. Il s'agit du noeud d2 pour le réseau R1 et du noeud h3 pour le réseau R2. Les noeuds d2 et h3 agissent ainsi en tant que heads respectivement des grappes C1 et C2. De cette manière, l'énergie consommée, notamment pour transmettre à distance des données collectées au sein d'un réseau, est mutualisée sur une pluralité de noeuds. En variante, les heads peuvent être aléatoirement désignés, ou plus précisément peuvent aléatoirement s'auto-désigner respectivement heads, à la condition que ces derniers disposent de moyens matériels et/ou logiciels suffisants pour mettre en oeuvre un service déterminé.

A titre d'exemple, le procédé « LEACH », tel que décrit notamment par le document titré « An Application-Specific Protocol Architecture for Wireless Microsensor Networks » (W. Heinzelman, A. Chandrakasan, H. Balakrishnan - IEEE TRANSACTIONS ON WIRELESS COMMUNICATIONS, VOL. 1, NO. 4, OCT. 2002), permet dans un réseau simple-saut, de désigner aléatoirement un noeud pour qu'il devienne head. Les autres noeuds appartenant à la grappe dudit head, noeuds que nous nommerons respectivement « membre » ou « member » selon une terminologie anglo-saxonne, adressent à la tête de grappe, donc au head, leurs messages de service. En liaison avec la figure 1, chaque noeud membre est représenté par un cercle dessiné en trait fin. Ainsi, au sein du réseau R2, le head h3 communique directement avec les noeuds g2 à g4, h2 et h3 ainsi qu'avec les noeuds i2 à i4. Le head collecte lesdites données émises depuis différents noeuds membres, les traite, les agrège voire les consolide, et déclenche, par exemple, une émission longue portée à destination d'une entité distante, telle qu'un serveur RS décrit en liaison avec la figure 2. Selon cette technique connue, une fois qu'un noeud a assuré le rôle de head, un tel noeud ne peut assurer de nouveau un tel rôle avant l'expiration d'une période déterminée. Un nouveau noeud membre est alors désigné aléatoirement head, assurant ainsi une continuité de service. Pour qu'un noeud, que nous nommerons « libre » ou « loose » selon une terminologie anglo-saxonne, représenté par un cercle dessiné en trait double en liaison avec la figure 1, puisse « adhérer » à un head et ainsi constituer une nouvelle grappe ou rejoindre une grappe existante, un tel noeud libre, situé à portée radio d'un noeud promu ou désigné head, est agencé pour recevoir un message d'enrôlement MH émanant dudit head, émis généralement sous la forme d'une émission indifférenciée (également connue sous l'appellation anglo-saxonne « broadcast ») de messages d'enrôlement MH à destination de tout noeud situé à portée radio du head. La figure 1, permet, au travers du réseau R2, de décrire la résultante d'une émission d'un message MH transmis depuis le noeud h3, désigné pour agir en tant que head, message MH transmis selon un mode broadcast de courte portée aux noeuds situés à portée de communication, en l'occurrence, les noeuds g2 à g4, h2 et h4, ainsi que les noeuds i2 à i4, initialement noeuds libres, à l'instar des autres noeuds, tels que, de manière non exhaustive, les noeuds f1 à f5, représentés par des cercles en traits doubles sur la figure 1. A réception d'un tel message d'enrôlement MH, un noeud libre, par exemple le noeud h4, met à jour sa mémoire de données, ladite mémoire coopérant avec son unité de traitement pour y consigner les coordonnées ou la valeur de l'identifiant du head, soit l'identifiant du noeud h3 en liaison avec la figure 1. Le dispositif h4, précédemment libre, devient membre de la grappe C2, représenté par un cercle en trait fin. Le dispositif h3, agissant en tant que head, devient le destinataire de tout message de service MS comportant des données collectées par le dispositif h4 nouvellement membre de la grappe C2 à l'instar des autres dispositifs membres de ladite grappe, soit les noeuds g2, g3, g4, i2, i3 et i4. Ainsi, lesdits noeuds g2 à g4, h2 et h4, tout comme les noeuds i2 à i4, préalablement noeuds libres, deviennent noeuds membres, apparaissant en cercles dessinés en simple trait sur la figure 1. L'émission du message MH par le noeud h3 est limitée en portée. Aussi des noeuds, situés hors de portée, ne reçoivent pas le message MH comme message intelligible, voire ne le reçoivent pas du tout. Le réseau R2 étant de type simple-saut, les noeuds étant hors de portée de h3, tels que les noeuds f1 à f5, g1, g5, h1, h5, i1, i5 ou encore les noeuds j1 à j5 demeurent des noeuds libres, représentés par des cercles dessinés en trait double. La grappe C2 ne comporte que le noeud h3, agissant en tant que head, et les noeuds membres, c'est-à-dire ayant accepté l'enrôlement du head h3.

Une transposition de l'enseignement LEACH dans le cadre d'un réseau multi-sauts, comme le réseau R1 décrit en liaison avec la figure 1, pourrait laisser supposer que les noeuds, devenant membres d'une grappe comportant un noeud agissant en tant que head, enregistrent, au sein de leurs mémoires de données respectives, la route, c'est-à-dire, la valeur de l'identifiant du noeud agissant en tant que head et au moins la valeur de l'identifiant du noeud ayant relayé le message d'enrôlement dudit head, voire en variante, les valeurs respectives des identifiants des noeuds intermédiaires ou relayeurs le séparant dudit head. Ainsi, à titre d'exemple, le noeud c2 enregistre la valeur de l'identifiant du head d2, ayant reçu directement un message d'enrôlement MH dudit noeud d2. Le noeud b2 enregistre, quant à lui, outre la valeur de l'identifiant du noeud d2, la valeur de celui du noeud c2 ayant relayé le message d'enrôlement MH de d2 au profit du noeud b2.

Une telle approche permet en théorie, ou du moins selon un mode d'application parfait, de préserver les ressources énergétiques globales d'un réseau de communication comportant une pluralité de noeuds communicants. En pratique ou dans la réalité, et notamment selon des domaines d'application ou d'exploitation d'un tel réseau de communication en lien avec le transport de conteneurs coopérant avec des dispositifs électroniques communicants, une telle solution demeure non pertinente, du moins peu efficace.

En effet, prenons comme exemple d'application préférée mais non limitatif, l'exploitation d'un réseau de communication sans fil dont les noeuds consignent, collectent et transmettent des mesures en lien avec une pluralité de conteneurs, tels que des containers de biens ou de marchandises. Imaginons que chaque conteneur soit associé à un dispositif électronique communicant mettant en oeuvre un procédé de communication tel que le LEACH ou un équivalent de type multi-sauts. Selon cette hypothèse, chaque dispositif électronique communicant associé à un conteneur agit en tant que noeud au sein du réseau sans fil, tel que le réseau R2 décrit en liaison avec la figure 1. Imaginons que le mode de communication entre noeuds se fasse par voie radio. Outre le fait qu'un procédé de communication de type LEACH impose une approche simple-saut, imposant ainsi que chaque noeud puisse être en mesure de communiquer directement avec un head, l'agencement relatif des conteneurs, par exemple sur un navire, sur une aire de stockage ou sur toute plateforme de transport routière ou ferroviaire, crée un contexte applicatif, tel qu'un noeud désigné head pourrait ne pas être ou ne plus être en mesure d'assurer sa mission, consistant par exemple à transmettre des données agrégées à destination d'une unité distante, du seul fait de son positionnement dans un empilement de conteneurs par exemple. En effet, nombreux sont les obstacles constitués par une plateforme de transport et/ou un espace de stockage, du fait de cloisonnages ou de confinements partiels imposés par la structure d'accueil des conteneurs, ou encore par les interactions engendrées mutuellement par les conteneurs eux-mêmes, dont l'empilement peut entraîner une dégradation, voire une perte de capacité à pouvoir transmettre des données par voie longue distance de la part d'un head. Le risque de constater une perte de données, des lenteurs d'acheminement desdites données, mais aussi des dépenses énergétiques inutiles et non pertinentes pour « animer » une grappe dont le head ne serait pas capable d'assurer efficacement sa fonction ou service, est très grand. Ce risque l'est d'autant plus dans le cas où des élections aléatoires de heads consécutives se traduirait par des « choix » peu fructueux. Pour résoudre de tels inconvénients, la société TRAXENS, associée à l'Institut National français de Recherche en Informatique et en Automatique, a conçu un réseau de communication sans fil, particulièrement innovant et performant, quel que soit l'agencement relatif des noeuds et quel que soit le cadre applicatif ou d'exploitation dudit réseau, que celui-ci soit de type simple-saut ou multi-sauts. Un tel réseau permet d'optimiser la capacité globale du réseau à assurer un service déterminé à partir de données collectées par les différents noeuds. Il s'appuie principalement sur un procédé d'adhésion à une grappe de dispositifs communicants selon des modalités d'élection de heads, si et seulement si ces derniers sont en capacités réelles d'assumer leur rôle de head, par exemple pour émettre des données selon un mode de communication longue distance. Chaque noeud mettant en oeuvre un tel procédé peut décider d'agir en tant que head, à partir du moment où ledit noeud sait qu'il est en situation de tenir efficacement son rôle. Par ailleurs, tout noeud libre peut décider d'adhérer ou non à une grappe de noeuds, ladite grappe comportant ledit head, avantageusement auto-désigné.

Une telle innovation apporte de nombreux avantages parmi lesquels, nous pouvons mentionner qu'il est possible de :
- mutualiser de manière pertinente les dépenses énergétiques sur les noeuds du réseau, prolongeant ainsi la capacité à rendre un service dudit réseau de manière inégalée par rapport aux solutions évoquées précédemment ;
- concevoir un réseau de noeuds automatiquement adaptable et fonctionnel au gré des changements de positions relatives entre les noeuds ou de l'évolution des conditions d'exploitation desdits noeuds, par exemple lors de la manutention, du stockage ou du transport de conteneurs associés chacun à un dispositif électronique ;
- privilégier la robustesse du service, par exemple l'émission de données par voie longue distance, en conférant à chaque noeud, l'opportunité de déterminer son rôle au sein du réseau et de se référer à chaque instant au meilleur head selon le service considéré, tout en minimisant les conflits ou modification de grappes lors d'élections concomitantes d'une pluralité de heads situés à portée radio de noeuds communs.

Bien que proposant une avancée significative, une telle solution présente, à l'instar des solutions concurrentes évoquées précédemment, certaines limites ou inconvénients, notamment si un tel réseau de communication est exploité dans un contexte applicatif pour lequel la topologie dudit réseau est particulièrement changeante, c'est-à-dire pour lequel des nouveaux noeuds souhaitent rejoindre le réseau ou pour lequel, des noeuds se déplacent au regard des autres, devenant ainsi à portée radio ou bien au contraire, devenant hors de portée de communication radio d'un head ou d'un membre d'une grappe à laquelle ils avaient respectivement et préalablement adhéré.

En effet, quel que soit le réseau de communication choisi, les routes ou topologies, c'est-à-dire la constitution ou la destruction de grappes, dudit réseau ne sont pas mises à jour avec suffisamment de régularité ou selon une fréquence suffisante pour tenir compte de la dynamique dudit réseau. A l'aide des solutions connues, si de telles mises à jour étaient réalisées selon une grande fréquence, le nombre de messages d'enrôlement, de destruction de grappe ou de service se verrait décuplé, de sorte que l'objectif principal visant à préserver la consommation énergétique des noeuds du réseau ne saurait être tenu.

L'invention

L'invention est définie par les revendications. Les modes de réalisations ou les exemples de la description qui ne sont pas couverts par lesdites revendications, ne font pas partie de l'invention telle que revendiquée.

L'invention permet de répondre à la grande majorité des inconvénients soulevés par les solutions connues. En constituant un réseau de communication sans fil, particulièrement innovant et robuste, y compris lorsque des noeuds constituant ledit réseau sont mobiles les uns par rapport aux autres ou lorsque la topologie dudit réseau se révèle fluctuante, tout noeud libre, c'est-à-dire non tête de grappe (head) ou non membre d'une grappe, peut solliciter, à la demande, une procédure d'affiliation à un membre d'une grappe. Une telle procédure d'affiliation peut découler d'une adaptation des différents réseaux décrits précédemment, notamment ceux illustrés en liaison avec les figures 1 ou 2. Les demandes d'affiliation de noeuds libres sont représentées par des flèches en traits doubles. Il s'agit en l'espèce des noeuds c5 ou i5 qui sollicitent respectivement une affiliation auprès des noeuds c4 et i4, membres respectifs des grappes C1 et C2 dont les heads sont les noeuds d2 pour le réseau R1 et h3 pour le réseau R2. La figure 1 illustre également une variante conforme à l'invention selon laquelle, un noeud libre, tel que le noeud c8, peut à son tour adresser une demande d'affiliation auprès d'un noeud, en l'espèce le noeud c5 selon la figure 1, préalablement affilié à la grappe C1 dont la tête de grappe est le noeud d2.

Chaque noeud mettant en oeuvre un procédé selon l'invention peut ainsi, à sa demande et indépendamment de la politique d'enrôlement des heads, solliciter une affiliation auprès d'un membre d'une grappe et ainsi, transmettre des messages de service à destination d'un head, via notamment le noeud membre ayant accepté la procédure d'affiliation, bien que ledit head soit hors de portée radio dudit noeud sollicitant une affiliation pour transmettre un message d'enrôlement. L'invention permet ainsi d'étendre des grappes constituées après une procédure d'enrôlement, voire de transformer un réseau de type simple-saut en un « pseudo réseau multi-sauts », le noeud membre ayant accepté une demande d'affiliation oeuvrant en tant que noeud relayeur du noeud affilié pour la transmission de messages de service.

A cet effet, l'invention concerne un procédé mis en oeuvre par une unité de traitement d'un premier dispositif électronique communicant comportant en outre une mémoire de données, des premiers moyens de communication assurant une communication de proximité sans fil avec tout autre dispositif électronique communicant situé à portée de communication au sein d'une grappe comprenant une pluralité de dispositifs électroniques communicants, ladite mémoire et lesdits moyens de communication coopérant avec ladite unité de traitement, la mémoire de données mémorisant la valeur d'un identifiant dédié au premier dispositif électronique communicant et un registre agencé pour comporter la valeur courante d'un identifiant d'un dispositif électronique communicant agissant en tant que tête de grappe. Ledit procédé comporte une étape pour émettre un message de service à destination du dispositif agissant en tant que tête de grappe.

Pour s'assurer de la persistance de la grappe et prévenir le risque de perte d'informations contenues dans des messages de services, le procédé comporte :
- une étape préalable à l'émission du message de service pour élaborer et émettre, par les premiers moyens de communication, un message de vérification d'appartenance à la grappe, ledit message encodant :
   i. la valeur de l'identifiant d'un deuxième dispositif électronique communicant en tant qu'identifiant du dispositif électronique communicant destinataire dudit message de vérification d'appartenance à la grappe ;
   ii. la valeur de l'identifiant du premier dispositif en tant qu'identifiant du dispositif électronique communicant source dudit message de vérification d'appartenance à ladite grappe.

Pour limiter les flux de messages le procédé peut prévoir que l'étape préalable à l'émission du message de service pour élaborer et émettre, par les premiers moyens de communication, un message de vérification d'appartenance à la grappe n'est mise en oeuvre que si une étape de test atteste que le dispositif est affilié à la grappe.

Pour attester de la persistance de la grappe, le procédé peut comporter :
- une étape, mise en oeuvre si et seulement si un message accusant réception dudit message de vérification d'appartenance à la grappe est reçu avant l'expiration d'une durée maximale d'attente déterminée à compter de l'émission du message de vérification d'appartenance à la grappe, pour décoder ledit message accusant réception et en déduire :
   i. la valeur de l'identifiant du dispositif destinataire dudit message accusant réception du message de vérification d'appartenance à la grappe;
   ii. la valeur de l'identifiant du dispositif source dudit message accusant réception du message de vérification d'appartenance à la grappe.

Selon ce mode de réalisation avantageux, les étapes pour élaborer et déclencher l'émission d'un message de service ne sont avantageusement mises en oeuvre que si :
- la valeur déduite de l'identifiant du dispositif destinataire du message accusant réception du message de vérification d'appartenance à la grappe est égale à celle de l'identifiant du premier dispositif électronique communicant ;
- la valeur déduite de l'identifiant du dispositif source dudit message accusant réception du message de vérification d'appartenance à la grappe est égale à celle de l'identifiant du deuxième dispositif électronique communicant.

Pour étendre ladite grappe, un procédé d'affiliation selon l'invention peut comporter :
- une étape pour recevoir un message de demande d'affiliation élaboré et émis par un troisième dispositif électronique communicant demandant une affiliation à une grappe, ledit message de demande d'affiliation comportant la valeur de l'identifiant dudit troisième dispositif demandant une affiliation ;
- une étape pour décoder ledit message de demande d'affiliation et pour en déduire la valeur dudit identifiant dudit troisième dispositif demandant une affiliation ;

- une étape pour élaborer un message accusant réception de la demande d'affiliation consistant à encoder au sein dudit message:
   i. la valeur de l'identifiant du premier dispositif en tant qu'identifiant de dispositif source dudit message accusant réception de la demande d'affiliation,
   ii. la valeur de l'identifiant du troisième dispositif demandant une affiliation en tant qu'identifiant de dispositif destinataire dudit message accusant réception de la demande d'affiliation,
   iii. la valeur courante de l'identifiant d'un quatrième dispositif électronique communicant agissant en tant que tête de grappe, ladite valeur étant lue dans le registre,
- une étape pour déclencher l'émission par les premiers moyens de communication du message accusant réception de la demande d'affiliation.

Dans le cas où il est possible de quantifier une capacité à assurer un service déterminé par un dispositif électronique, l'étape pour élaborer un message accusant réception de la demande d'affiliation peut consister en outre à encoder une valeur décrivant une capacité du quatrième dispositif électronique communicant agissant en tant que tête de grappe à assurer un service, ladite valeur étant enregistrée dans le registre mémorisant en outre la valeur courante de l'identifiant dudit quatrième dispositif électronique communicant agissant en tant que tête de grappe.

Pour que le premier dispositif électronique communicant puisse être en mesure de donner une suite favorable et pertinente à une demande d'affiliation, l'invention peut prévoir que l'étape pour déclencher l'émission, par les premiers moyens de communication , du message accusant réception de la demande d'affiliation ne puisse être accomplie que si la mémoire de données mémorise un registre comportant une valeur courante d'un identifiant d'un dispositif électronique communicant agissant en tant que tête de grappe.

L'invention peut prévoir également que le premier dispositif électronique communicant puisse être, à son tour, à même de demander une affiliation à une grappe. Une telle situation peut par exemple résulter d'une dissolution de la grappe dont était membre ledit premier dispositif. Pour cela, un procédé d'affiliation selon l'invention peut comporter :
- une étape pour élaborer un message de demande d'affiliation consistant à encoder la valeur de l'identifiant du premier dispositif en tant qu'identifiant d'un dispositif demandant une affiliation à une grappe ;
- une étape pour déclencher l'émission par les premiers moyens de communication dudit message de demande d'affiliation;
- une étape pour recevoir par les moyens de communication un message élaboré et émis par un cinquième dispositif accusant réception du message de demande d'affiliation;
- une étape, mise en oeuvre si et seulement si ledit message, accusant réception du message de demande d'affiliation, est reçu avant l'expiration d'une durée maximale d'attente déterminée à compter de l'émission dudit message de demande d'affiliation, pour décoder ledit message accusant réception du message de demande d'affiliation et en déduire :
   i. la valeur de l'identifiant du dispositif destinataire dudit message accusant réception d'une demande d'affiliation ;
   ii. la valeur de l'identifiant d'un sixième dispositif électronique communicant agissant en tant que tête de grappe à laquelle appartient le cinquième dispositif source dudit message (MAA) accusant réception d'une demande d'affiliation ;
- une étape, mise en oeuvre si et seulement si ladite valeur déduite de l'identifiant du dispositif destinataire est égale à celle de la valeur de l'identifiant du premier dispositif demandant une affiliation, pour inscrire dans le registre, la valeur déduite de l'identifiant du sixième dispositif électronique communicant agissant en tant que tête de grappe, en tant que valeur courante d'identifiant de dispositif agissant en tant que tête de grappe.

Avantageusement, selon ce mode de réalisation :
- l'étape pour décoder le message accusant réception du message de demande d'affiliation peut consister en outre à déduire dudit message la valeur de l'identifiant du cinquième dispositif électronique communicant source dudit message;
- l'étape pour mettre à jour le registre peut consister en outre à y enregistrer ladite valeur d'identifiant déduite en tant qu'identifiant d'un dispositif électronique communicant sur une route ascendante séparant le premier dispositif électronique communicant demandant une affiliation du sixième dispositif électronique communicant agissant en tant que tête de grappe.

Pour véhiculer des informations, par exemple en lien avec l'environnement du premier dispositif électronique communicant, à destination d'un dispositif agissant en tant que tête de grappe, un procédé selon l'invention peut comporter une étape préalable à l'étape pour émettre un message de service à destination d'un dispositif agissant en tant que tête de grappe pour élaborer et déclencher, par les premiers moyens de communication, l'émission du message de service à destination du dispositif électronique communicant dont la valeur d'identifiant est mémorisée, en tant que valeur courante d'identifiant du dispositif électronique communicant agissant en tant que tête de grappe, par le registre.

Selon un deuxième objet, pour notamment adapter un dispositif électronique communicant, l'invention concerne également un programme d'ordinateur comportant une pluralité d'instructions de programme qui, lorsqu'elles sont :
- préalablement enregistrées dans une mémoire de programmes d'un tel dispositif électronique comportant en outre une unité de traitement, des premiers moyens de communication assurant une communication de proximité sans fil avec tout autre dispositif électronique situé à portée de communication, une mémoire de données enregistrant la valeur d'un identifiant dédié au dispositif et un registre pour comporter la valeur courante d'un identifiant d'un dispositif agissant en tant que tête de grappe, lesdites mémoires et lesdits premiers moyens de communication coopérant avec ladite unité de traitement ;
- exécutées ou interprétées par ladite unité de traitement,
provoque la mise en oeuvre d'un procédé d'affiliation tel que le prévoit l'invention.

Selon un troisième objet, l'invention concerne en outre un dispositif électronique comportant une unité de traitement, une mémoire de données, une mémoire de programmes, des premiers moyens de communication assurant une communication de proximité sans fil avec tout autre dispositif électronique situé à portée de communication, lesdites mémoires et premiers moyens de communication coopérant avec ladite unité de traitement, la mémoire de données comportant la valeur d'un identifiant dédié au dispositif et un registre pour comporter la valeur courante d'un identifiant d'un dispositif agissant en tant que tête de grappe. Afin que ledit dispositif puisse mettre en oeuvre un procédé d'affiliation conforme à l'invention, il comporte avantageusement dans la mémoire de programmes, les instructions d'un programme tel que précédemment mentionné.

L'invention prévoit également un système comportant une pluralité de tels dispositifs électroniques communicants. Selon un exemple d'application préférée et non limitatif, un tel système peut avantageusement comporter une pluralité de conteneurs de biens, de marchandises solides, fluides ou liquides, lesdits conteneurs coopérant respectivement avec les dispositifs électroniques communicants, ces derniers comportant chacun un capteur coopérant avec l'unité de traitement pour mesurer et collecter une grandeur en lien avec les environnements interne et/ou externe desdits conteneurs.

Les figures

D'autres caractéristiques et avantages apparaîtront plus clairement à la lecture de la description qui suit se rapportant à un exemple de réalisation donné à titre indicatif et non limitatif et à l'examen des figures qui l'accompagnent parmi lesquelles :
- la figure 1, déjà décrite, illustre deux exemples de configurations d'un réseau de communication sans fil, respectivement simple-saut ou multi-sauts ;
- la figure 2, partiellement déjà décrite, présente l'architecture fonctionnelle d'un dispositif électronique communicant selon l'art antérieur et selon l'invention lorsque ce dernier est adapté pour mettre en oeuvre un procédé d'affiliation à une grappe de dispositifs communiquant avec des pairs via un réseau de communication sans fil, ledit procédé étant conforme à l'invention ;
- la figure 3 présente une description fonctionnelle d'un procédé d'affiliation selon l'invention.

Description détaillée d'un exemple de réalisation illustrant l'invention

Un dispositif électronique communicant conforme à l'invention s'apparente à un dispositif 10 connu, tel que celui décrit précédemment en liaison avec la figure 2.

A ce titre, un dispositif électronique communicant conforme à l'invention comporte une unité de traitement 11, consistant en un ou plusieurs microcontrôleurs chargés de mettre en oeuvre des traitements sur des données notamment. Lesdites données sont avantageusement, toutes ou parties, enregistrées sur une ou plusieurs mémoires de données 12, généralement électriquement effaçables et inscriptibles. La mémoire 12 peut avantageusement comporter une section non effaçable, physiquement isolée ou simplement agencée pour qu'un accès en écriture ou en effacement soit proscrit, ou encore requérant la satisfaction d'une procédure d'authentification. Une telle section avantageuse de la mémoire 12, dont l'accès en modification est restreint, permet d'y consigner notamment la valeur d'un identifiant ID dédié au dispositif électronique communicant. Avantageusement mais de manière non obligatoire, un dispositif 10 peut en outre comporter une ou plusieurs mémoires de programmes 14 pour enregistrer un ou plusieurs programmes P, ou plus généralement un ou plusieurs ensembles d'instructions de programmes, lesdites instructions de programmes étant intelligibles par l'unité de traitement 11. L'exécution ou l'interprétation desdites instructions par ladite unité de traitement provoque la mise en oeuvre d'un procédé de traitement de données ou de fonctionnement du dispositif 10. Ce dernier comporte également des premiers moyens de communication 13 assurant une communication de proximité sans fil avec tout autre dispositif électronique, tel que le dispositif 10i, à condition que ce dernier soit à portée de communication. Par l'intermédiaire desdits premiers moyens de communication 13, le dispositif 10, ou plus précisément son unité de traitement 11, peut émettre et/ou recevoir des messages à destination ou en provenance de dispositifs tiers positionnés à portée de communication. De tels messages peuvent être de toute nature. Parmi différents types de messages, nous pouvons mentionner, de manière non exhaustive, des messages de données MS en lien avec un service particulier S, des messages d'enrôlement MH, des messages de destruction de grappe MR.

Certains dispositifs communicants peuvent tirer bénéfice du champ électromagnétique créé par le réseau, pour y puiser l'énergie électrique suffisante pour assurer leurs fonctionnements, ne serait-ce que durant une brève période temporelle. Toutefois, pour assurer un fonctionnement continu et/ou mettre en oeuvre des traitements nécessitant davantage d'énergie, un dispositif électronique communicant 10 selon l'invention peut avantageusement comporter une source en énergie électrique 17 propre, alimentant notamment l'unité de traitement 11, voire tout autre élément constituant ledit dispositif qui le nécessiterait. Une telle source 17 consiste généralement en une batterie ou une pluralité de batteries. Selon le contexte applicatif privilégié en lien notamment avec le suivi de conteneurs, bien que ce contexte particulier ne saurait limiter le champ d'exploitation de l'invention, un dispositif électronique communicant 10 peut comporter un ou plusieurs capteurs 15 coopérant avec l'unité de traitement 11. Un tel capteur peut mesurer une ou plusieurs grandeurs en lien avec les environnements interne et/ou externe desdits conteneurs et en produire des données. A titre d'exemple, comme illustré par la figure 2, un capteur 15 peut mesurer la température et/ou l'humidité régnant au sein d'un conteneur, l'obscurité ou la perte d'obscurité au sein de l'enceinte attestant une ouverture inopinée du conteneur, voire encore des chocs. Si nécessaire, le ou les capteurs peuvent coopérer avec l'unité de traitement d'un dispositif via des sondes ou des nappes conductrices, notamment dans le cas où un dispositif 10 serait apposé contre la paroi extérieure d'un conteneur alors que l'on souhaite superviser, au moyen dudit dispositif 10, l'environnement intérieur dudit conteneur. Un tel dispositif 10 peut en outre comporter une horloge lui permettant d'horodater les mesures collectées, ladite horloge n'étant pas représentée en figure 2.

Selon le ou les services que l'on souhaite opérer à l'aide de dispositifs électroniques communicants selon l'invention, ces derniers peuvent comporter des moyens additionnels et optionnels. A titre d'exemple préféré, un service peut consister à :
- collecter des données auprès des noeuds d'un réseau de dispositifs électroniques communicants conformes à l'invention, par exemple en lien avec des grandeurs mesurées par lesdits noeuds ;
- à agréger lesdites données collectées auprès d'une pluralité de noeuds, puis à élaborer des messages MC encodant des données de service consolidées à destination d'une entité distante, telle qu'un serveur RS.

Pour émettre de tels messages MC, un dispositif 10 comporte avantageusement des deuxièmes moyens de communication longue distance 16 coopérant avec l'unité de traitement 11. Une telle communication peut être réalisée via un réseau RR, par voies GPRS ou satellite, voire par toute autre voie de communication adaptée. Les différents constituants internes du dispositif électronique coopèrent avec l'unité de traitement 11, avantageusement par bus filaires ou par couplages. Le dispositif 10 peut comporter un boîtier abritant lesdits constituants, ledit boîtier comportant avantageusement des moyens de fixation pour apposer le dispositif 10 sur un support dont on souhaite assurer le suivi, en l'occurrence un conteneur suivant l'exemple d'application préféré.

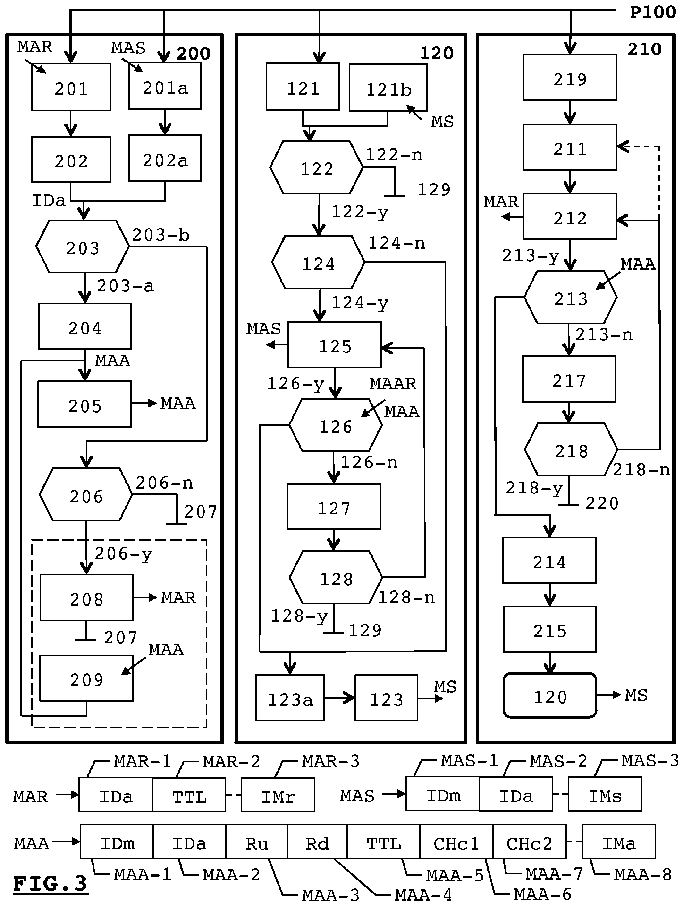

Pour mettre en oeuvre l'invention, il est requis d'agir sur le fonctionnement de l'unité de traitement, plus précisément sur un procédé de communication mis en oeuvre par ladite unité de traitement. Un tel procédé sera décrit en liaison avec la figure 3 ultérieurement. Un mode d'adaptation préféré consiste à prévoir un programme, ou plus généralement des instructions de programmes mutuellement agencées, pour mettre en oeuvre ledit procédé lors de l'exécution ou l'interprétation desdites instructions de programme par l'unité de traitement. Avantageusement, ledit programme P est chargé dans la mémoire de programmes 15 lors de l'assemblage dudit dispositif ou, par téléchargement dudit programme au sein de la mémoire 15 après ladite phase d'assemblage du dispositif.

L'invention réside principalement dans la mise en oeuvre d'un réseau simple-saut, par exemple un réseau LEACH, ou avantageusement multi-sauts, pour lequel chaque noeud consiste en un dispositif électronique communicant tel que le dispositif 10 précédemment décrit.

Un noeud d'un tel réseau est généralement adapté ou agencé pour mettre en oeuvre un procédé d'adhésion à une grappe de dispositifs. La mémoire de données 12 comporte, outre la valeur de l'identifiant ID dédié au dispositif électronique communicant, un registre RH prévu pour comporter la valeur courante IDHc d'un identifiant d'un dispositif électronique communicant agissant en tant que head, tel que les noeuds d2 ou h3 selon la figure 1.

Lorsqu'un dispositif choisit d'adhérer à une grappe dont l'un des noeuds agit en tant que head, cette adhésion est généralement exclusive. En d'autres termes, un noeud ne peut être membre de grappes distinctes, c'est-à-dire ayant respectivement des noeuds heads distincts, pour un même service. Un noeud adhérant à une grappe choisit le meilleur head pour ledit service.

Toutefois un noeud peut également être rattaché à une pluralité de heads, si lesdits heads sont assignés à la mise en oeuvre de services distincts, tels que, par exemple, un head pour l'émission de données longue distance (service Si) et un deuxième head pour la mise en oeuvre d'un service de gestion d'alarmes (service Sj) sur un site.

A ce titre, à l'instar de la solution LEACH, précédemment présentée, des grappes de dispositifs électroniques communicants, telles que les grappes C1 et C2 des réseaux R1 et R2 décrits en liaison avec la figure 1, comportent un dispositif agissant en tant que head, tel que les noeuds d2 ou h3 décrits en liaison avec la figure 1. Les autres dispositifs agissent en tant que membres de ladite grappe, tels que, de manière non exhaustive, les noeuds c2 ou i3 décrits en liaison avec la figure 1. Le rôle d'un membre consiste principalement à collecter des informations, telles que par exemple des mesures de grandeurs environnementales, de les traduire en données puis d'encoder lesdites données sous la forme d'un message de service MS à destination d'un head en capacité d'assurer le service déterminé. Ce head reconnaît lesdits messages de service MS, puis met en oeuvre le service déterminé S. Par exemple, un tel service peut consister à agréger les données transmises au head depuis plusieurs membres via des messages MS, puis à mettre en oeuvre une transmission longue distance desdites données agrégées, voire consolidées, sous la forme de messages MC à destination d'une entité distante RS.

Un message de service MS, adressé depuis un membre d'une grappe à destination d'un head, est structuré de sorte à comporter :
- une information caractérisant le type du message (MS, MH, MR, etc.) ;
- la valeur d'un identifiant du noeud source, par ailleurs généralement noeud membre ;
- la valeur d'un identifiant du noeud destinataire, en l'occurrence un head, voire un identifiant d'un noeud intermédiaire ou relayeur dans le cas d'un réseau multi-sauts,
- des données, par exemple en lien avec des grandeurs mesurées par un capteur du dispositif,
- éventuellement un code de redondance, voire un cryptogramme ou toute autre information de contrôle permettant à un noeud réceptionnant un tel message de service de le décoder, de l'exploiter ou de le relayer.

Un message MS, comme tout autre message circulant au sein du réseau, peut déclencher des messages d'accusé de réception MACK, transmis par le réceptionnaire du message à destination du noeud source. A l'extinction d'une période déterminée ou « timeout » selon une terminologie anglo-saxonne, si aucun message MACK n'est reçu, une nouvelle émission du message MS est déclenchée, et ce pour un nombre limité d'itérations à l'issue duquel le noeud source considère que la « route » ou la communication avec le noeud destinataire n'est pas ou plus disponible. Un tel noeud source peut décider d'abandonner la grappe et de recouvrer un statut de noeud libre, ou encore de chercher à adhérer à une autre grappe.

L'adhésion d'un noeud libre à un noeud agissant en tant que head est proche de celle mise en oeuvre selon la solution LEACH. Toutefois, les modalités d'élection d'un head et les modalités d'adhésion d'un noeud libre pour devenir membre d'une grappe peuvent être très différentes, comme le prévoit par exemple la société TRAXENS, associée à l'Institut National français de Recherche en Informatique et en Automatique (INRIA). Selon cette variante, seuls des noeuds en réelle capacité d'assurer un service déterminé sont aptes à s'auto-désigner head. De leur côté, les autres noeuds sont libres d'arbitrer une compétition de heads et de choisir le head qui apparaît le meilleur candidat pour mettre en oeuvre le service auquel ils contribuent.

Quel que soit le mode d'élection de heads, un premier mode de conception de dispositifs communicants peut consister à maintenir continuellement ces derniers en écoute de fréquences de communication radio pour tester la présence de messages émanant de dispositifs pairs. Une telle approche peut entraîner une dépense énergétique importante et obérer l'autonomie de l'ensemble du réseau. Une deuxième approche, connue sous la terminologie anglo-saxonne Wake On Radio (WOR), consiste à plonger les noeuds dans un relatif sommeil durant la grande majorité du temps de leurs fonctionnements respectifs. La communication radio est notamment désactivée car très consommatrice en énergie électrique. De tels noeuds peuvent toutefois poursuivre la mise en oeuvre de traitements internes peu énergivores. De manière cyclique, de tels noeuds s'éveillent pour écouter d'éventuels messages en provenance de pairs ou pour émettre à leurs tours des messages d'enrôlement, de service, etc.

La figure 3 illustre un procédé P100 de communication comportant une procédure de demande d'affiliation à une grappe mis en oeuvre par un premier dispositif conforme à l'invention, tel qu'à titre d'exemple un dispositif 10 décrit en liaison avec la figure 2. Une telle procédure d'affiliation sur demande permet à un noeud libre, tel que par exemple le noeud c5 ou encore le noeud i5, de prendre l'initiative d'une phase de découverte d'un noeud membre ou head dans son voisinage. Une telle situation découle, par exemple, de l'apparition d'un tel noeud libre alors qu'une grappe a d'ores et déjà été constituée. Elle peut en outre découler de la destruction d'une grappe dont le noeud head et ses noeuds membres deviennent libres alors que lesdits noeuds membres ont besoin d'émettre des messages de service à destination d'un nouveau head. La situation peut encore découler d'un éloignement trop important, ou d'un positionnement non optimal, entre un noeud apte et candidat à devenir membre et un head, ledit noeud candidat se trouvant hors de portée radio ou trop éloigné en nombre de sauts pour qu'un message d'enrôlement émanant dudit head ne lui soit acheminé.

Selon les techniques connues, il est nécessaire qu'un noeud prenne l'initiative de s'auto-élire ou d'être désigné head, et qu'il déclenche une procédure d'enrôlement, pour que des noeuds libres puissent recouvrer un statut de noeud membre. Un temps et une énergie précieux peuvent ainsi être perdus dans l'acheminement de messages de service.

L'invention permet ainsi à un noeud libre de demander un rattachement à une grappe, donc indirectement à un head, par une procédure d'affiliation à la demande.

Décrivons dans un premier temps, un traitement 210 mis en oeuvre par un dispositif électronique communicant 10 conforme à l'invention, mettant en oeuvre un procédé P100. Un tel traitement consiste à déclencher une procédure d'affiliation.

Ce dernier peut comporter avantageusement une étape préalable 219 d'éveil du dispositif 10 si celui-ci met en oeuvre une technique Wake On Radio (WOR) par exemple. Ledit traitement 210 comporte une étape 211 pour élaborer un message de demande d'affiliation MAR. Un tel message comporte et/ou encode, comme première information MAR-1, la valeur de l'identifiant IDa du dispositif 10. Ledit identifiant est avantageusement enregistré de manière unique dans les moyens de mémorisation 12 dudit dispositif 10. Le traitement 210 comporte en outre une étape 212 pour déclencher l'émission dudit message de demande d'affiliation MAR à destination de tout noeud voisin, par les premiers moyens de communication 13. Un tel message MAR peut encoder sous la forme d'un champ additionnel MAR-3 d'autres informations complémentaires IMr.

La puissance d'émission d'un tel message MAR peut être prédéterminée et fixe. En variante, ladite puissance d'émission peut être variable afin, par exemple, d'être réduite selon la capacité énergétique restante des moyens d'alimentation internes 17 du dispositif mettant en oeuvre ledit procédé P100. Ladite puissance d'émission peut également être progressive, l'étape d'émission 212 étant itérative si la demande en affiliation demeure sans réponse comme nous le verrons ultérieurement.

Dans tous les cas, l'étape 212 pour déclencher l'émission d'un message de demande d'affiliation MAR est suivie d'une étape 213 d'attente de réception d'un message MAA, accusant réception dudit message de demande d'affiliation MAR, émis par un noeud voisin membre ou head d'une grappe. Une durée maximale d'attente à l'étape 213 d'un tel message MAA peut être paramétrée ou déterminée de sorte à qu'à l'issue d'un temps donné, le dispositif 10 mettant en oeuvre ledit procédé P100 considère (situation symbolisée par le lien référencé 213-n sur la figure 3) qu'il est trop esseulé ou mal positionné pour rejoindre une grappe. Le traitement 210 est ainsi interrompu à l'étape 220. Une telle étape 220 peut en outre consister à plonger le dispositif en sommeil ou en veille durant une période temporelle déterminée selon une technique WOR par exemple.

Lorsque durant l'étape 213, un message accusant réception MAA est réceptionné par les moyens 13 (situation symbolisée par le lien référencé 213-y sur la figure 3), le traitement 210 comporte une étape 214 pour décoder ledit message MAA. En effet, l'invention prévoit qu'un tel message MAA comporte ou encode notamment une première information MAA-1 consistant en la valeur de l'identifiant IDm du dispositif source dudit message MAA. Ce dernier encode en outre la valeur de l'identifiant IDa du dispositif source du message de demande d'affiliation, en tant qu'identifiant de dispositif destinataire du message MAA, sous la forme d'une information référencée MAA-2 sur l'exemple non limitatif décrit en liaison avec la figure 3. Ledit message MAA peut en outre avantageusement encoder la route ascendante Ru, sous la forme d'une information référencée MAA-3 sur la figure 3, comportant les valeurs des identifiants des noeuds membres et/ou relayeurs de messages d'enrôlement MH et/ou de service MS entre le noeud source dudit message MAA et le head de la grappe dont il fait partie. Un tel champ MAA-3 comporte avantageusement au moins la valeur de l'identifiant du noeud relayeur appartenant à ladite route qui est le plus proche du dispositif source du message MAA et l'identifiant IDH du head. Un champ MAA-4 peut en outre, ou en variante, encoder la route descendante séparant le noeud source du message MAA du noeud demandant l'affiliation. Avantageusement un message MAA peut en outre comporter, en variante ou en complément des champs MAA-3 et/ou MAA-4, des informations MAA-5 reflétant le nombre de sauts TTL nécessaire à la route ascendante Ru, voire à la route descendante Rd. Un message MAA, peut avantageusement comporter ou encoder des champs MAA-6, MAA-7, en lien par exemple avec des valeurs de capacités courantes CHc1, CHc2, du head à assurer tel ou tel service, voire encore toute autre information additionnelle IMa, sous la forme d'un champ référencé MAA-8 en liaison avec la figure 3.

L'étape 214 consiste ainsi à déduire du message MAA l'ensemble des informations pertinentes et encodées dans ledit message. Lorsque l'étape 214 confirme que la valeur d'identifiant encodée dans le champ MAA-2 correspond à la valeur de l'identifiant IDa du dispositif sollicitant la demande d'affiliation, le message MAA est considéré comme un message accusant réception de ladite demande d'affiliation. Le traitement 210 comporte alors une étape 215, subséquente à l'étape 214, consistant à enregistrer au sein des moyens de mémorisation 12 du dispositif, des informations déduites dudit message MAA, notamment la valeur de l'identifiant IDH du noeud head, voire celle de l'identifiant du premier noeud sur la route ascendante Ru depuis le noeud requérant l'affiliation. Une telle action peut avantageusement consister en la mise à jour d'un registre RH, au sein desdits moyens de mémorisation 12. La valeur de l'identifiant IDH est notamment inscrite en tant que valeur courante IDHc au sein du registre RH. Le dispositif 10 devient alors un noeud « affilié » à la grappe du noeud head. Le procédé P100 peut alors comporter et déclencher la mise en oeuvre d'un traitement 120 consistant à émettre un message de service MS à destination du head, via notamment le noeud ayant répondu favorablement à la demande d'affiliation, c'est-à-dire via le dispositif source du message MAA.

Nous avons vu précédemment que l'invention prévoit que la puissance d'émission d'un message de demande d'affiliation MAR puisse être progressive. L'objectif recherché par ce mode de réalisation est de préserver les ressources énergétiques des moyens 17 d'un dispositif 10 conforme à l'invention. Pour mettre en oeuvre une telle progressivité, la puissance d'émission d'un message MAR est tout d'abord paramétrée par l'unité de traitement pour transmettre, selon une technique de type broadcast, à faible portée ledit message MAR. Une première itération de l'étape 212 consiste ainsi à paramétrer la puissance d'émission à une valeur plancher Pmin. A l'issue de la durée maximale d'attente prévue à l'étape 213, si aucun message MAA accusant réception de la demande d'affiliation n'est réceptionné (situation symbolisée par le lien référencé 213-n sur la figure 3), l'étape 220 n'est pas automatiquement mise en oeuvre comme pour le précédent mode de réalisation. En lieu et place, le traitement 210 consiste à déclencher une nouvelle itération de l'étape 212 et ainsi émettre à nouveau le message MAR avec une puissance d'émission accrue Pmin+. Cet accroissement est réalisé par l'unité de traitement mettant en oeuvre le traitement 210 en une étape 217, par exemple selon un facteur multiplicatif donné ou un pas incrémental déterminé appliqué à la puissance plancher Pmin. Si, à l'issue de la durée maximale prévue à l'étape 213, aucun message MAA n'est réceptionné (situation symbolisée par le lien référencé 213-n sur la figure 3), le traitement 210 peut déclencher une nouvelle itération de l'étape 212. Une ou plusieurs itérations des étapes 217 et 212 peuvent ainsi se succéder tant qu'aucun message MAA n'est réceptionné tant que la puissance Pmin+ demeure inférieure à une puissance maximale Pmax d'émission d'un message MAR (situation symbolisée par le lien référencé 218-n sur la figure 3). Lesdites itérations cessent dès qu'en 218 la puissance maximale d'émission d'un message MAR est atteinte. Dans ce cas, le traitement 210 s'interrompt en 220.

L'invention prévoit une variante ou un complément au mode de réalisation précédemment décrit en lien avec une puissance d'émission d'un message MAR progressive. Selon ce nouveau mode de réalisation, l'étape 211 consistant à élaborer un message MAR consiste à intégrer dans ledit message un champ MAR-2 précisant le nombre de sauts autorisés, que nous noterons ci-après TTL, séparant un noeud requérant une affiliation d'un noeud membre ou head d'une grappe. Lorsque ledit nombre de sauts est supérieur à un, l'invention prévoit qu'un message de demande d'affiliation MAR puisse être relayé par un noeud qui n'agit pas en tant que membre ou head d'une grappe. Nous verrons ultérieurement comment une telle fonction est rendue possible en décrivant un traitement 200 du procédé P100 selon l'invention, traitement déclenché à la réception d'un message de demande d'affiliation MAR.

Selon ce mode de réalisation, les étapes 211 et 212, respectivement d'élaboration et de déclenchement de l'émission d'un message MAR suivies de l'étape 213 d'attente de la réception d'un message MAA, sont conjointement itérées en incrémentant ou en multipliant à l'étape 217 ledit nombre de sauts autorisés, à l'issue de chaque itération infructueuse, c'est-à-dire tant qu'aucun message MAA n'est reçu à l'étape 213 (situation symbolisée par le lien référencé 213-n sur la figure 3). Lorsque ledit nombre de sauts TTL atteint un plafond prédéterminé, situation symbolisée par le lien référencé 218-y sur la figure 3, et que l'étape 213 n'a pas permis de recevoir un message, le traitement 210 déclenche l'étape 220 et s'interrompt. Le dispositif mettant en oeuvre ledit procédé P100 demeure un noeud libre. A titre d'exemple non limitatif, la valeur minimale de TTL à la première itération de l'étape 211 peut être égale à un, signifiant qu'aucun relai du message MAR n'est autorisé par le requérant d'une affiliation. A chaque itération, ce nombre peut être multiplié par un facteur multiplicatif donné, par exemple de valeur égale à deux, jusqu'à ce que ladite valeur de TTL atteigne une valeur plafond égale à 16. En variante, la valeur de TTL peut être incrémentée à chaque itération d'un pas, par exemple égal à un ou à tout autre entier non nul. L'invention prévoit en outre que la durée d'attente maximale prévue à l'étape 213 puisse également être progressive et révisée à chaque itération à l'étape 217.

Etudions à présent, plusieurs modes de réalisation d'un traitement 200 mis en oeuvre par l'unité de traitement 11 d'un dispositif conforme à l'invention, tel que le dispositif 10 décrit en liaison avec la figure 2. Un tel traitement 200 est décrit en liaison avec la figure 3. Il est déclenché, lors de la mise en oeuvre d'un procédé d'affiliation P100, en réaction à la réception d'un message de demande d'affiliation MAR émis par un dispositif tiers requérant une affiliation à une grappe.

Un tel traitement 200 conforme à l'invention comporte ainsi une première étape 201 pour recevoir un message de demande d'affiliation MAR élaboré et émis par un dispositif électronique communicant, tel que le noeud c5 ou le noeud i5, décrit en liaison avec la figure 2. Un tel message MAR comporte ou encode notamment la valeur de l'identifiant IDa du dispositif requérant une affiliation à une grappe, par exemple au sein d'un champ MAR-1. Le procédé P100 comporte également une étape 202 pour décoder ledit message de demande d'affiliation MAR et ainsi en déduire notamment ladite valeur de l'identifiant IDa.

L'invention prévoit principalement deux situations, respectivement symbolisées par les liens référencés 203-a et 203-b sur la figure 3, lorsqu'un dispositif conforme à l'invention réceptionne en 201 un message de demande d'affiliation MAR émis par un deuxième dispositif conforme à l'invention et requérant une affiliation à une grappe :
- le dispositif réceptionnant ledit message MAR est un noeud membre ou head d'une grappe ; un tel dispositif, par exemple le noeud i4, tel que décrit en liaison avec les figures 1 et 2, réceptionnant un message MAR émis depuis le noeud i5, comporte un registre RH encodant une valeur courante IDHc d'un identifiant IDH, en l'espèce, l'identifiant du noeud h3 agissant en tant que noeud head de la grappe C2 ;
- le dispositif réceptionnant ledit message MAR est un noeud libre ; un tel dispositif, par exemple le noeud c5, tel que décrit en liaison avec les figures 1 et 2, réceptionnant un message MAR émis par le noeud c8, ne comporte pas un registre RH encodant une valeur courante IDHc égale à celle d'un identifiant IDH d'un noeud, tel que d2, agissant en tant que noeud head ; en variante, un tel noeud libre peut comporter un registre RH encodant une valeur déterminée indiquant que le noeud n'est pas membre ou head d'une grappe.

Dans la première situation (lien 203-a en figure 3), le traitement 200 comporte une étape 204 pour élaborer un message MAA accusant réception de la demande d'affiliation du dispositif requérant une affiliation. Une telle étape 204 consiste à encoder au sein du message MAA (champ MAA-2 selon l'exemple de la figure 3) la valeur de l'identifiant IDa du dispositif qui est à l'origine de la demande d'affiliation en tant qu'identifiant du dispositif destinataire du message MAA. Comme évoqué précédemment, une telle étape 204 consiste en outre à encoder (champ MAA-1 selon l'exemple de la figure 3) la valeur de l'identifiant IDm du dispositif mettant en oeuvre le traitement 200 et agissant en tant que noeud membre ou head d'une grappe. L'étape 204 peut en outre encoder (champ MAA-3 selon l'exemple de la figure 3) la route ascendante Ru, c'est-à-dire les valeurs des identifiants de noeuds séparant le noeud, s'apprêtant ainsi à émettre le message MAA, du head de la grappe dont il fait partie, ladite route comprenant la valeur de l'identifiant IDH dudit head. L'étape 204 peut en outre consister à encoder (champs MAA-5, MAA-6 selon l'exemple de la figure 3) des informations ou valeurs additionnelles décrivant une ou plusieurs capacités CHc1, CHc2 du head à assurer tel ou tel service. L'étape 204 peut en outre encoder la route descendante Rd séparant le noeud source du message MAA du noeud requérant l'affiliation (champ MAA-4 selon l'exemple de la figure 3), voire encore des informations additionnelles (champ MAA-8 selon l'exemple de la figure 3). Le traitement 200 comporte dès lors une étape 205 pour déclencher l'émission dudit message MAA par les moyens de communication 13 du dispositif 10 mettant en oeuvre ledit traitement 200.

Dans le cas où un tel dispositif, réceptionnant un message de demande d'affiliation MAR, est un noeud libre (deuxième situation symbolisée par le lien 203-b en figure 3), l'invention prévoit qu'avantageusement, selon un premier mode de réalisation, un tel dispositif demeure muet (étape 207). Selon un deuxième mode de réalisation, notamment lorsque l'étape 211 d'un traitement 210, conforme à l'invention et précédemment décrit, consiste à élaborer un message MAR encodant un champ précisant un nombre de sauts ou de relai autorisés, l'invention prévoit que le traitement 200 permette de relayer un message de demande d'affiliation MAR via un ou plusieurs noeuds qui n'agissent pas en tant que membres ou heads d'une grappe lors de la réception dudit message MAR. Selon ce mode de réalisation, le traitement 200 comporte une étape 206 visant à décrémenter d'un pas prédéfini, par exemple d'une unité, la valeur TTL déduite ou décodée à l'étape 202. L'étape 206 consiste en outre à comparer la valeur décrémentée du champ TTL à une valeur plancher, à titre d'exemple non limitatif, une valeur nulle. Si ladite valeur décrémentée atteint ladite valeur plancher (situation symbolisée par le lien 206-n en figure 3), le traitement 200 s'interrompt en 207 et le dispositif mettant en oeuvre ledit traitement demeure muet en réponse à la réception du message MAR. Dans le cas contraire (situation symbolisée par le lien 206-y en figure 3), le traitement 200 comporte une étape 208 pour encoder de nouveau les informations déduites en 202 du message MAR réceptionné, exception faite du champ TTL qui est mis à jour et prend la valeur TTL décrémentée en 206. L'étape 208 consiste en outre à déclencher l'émission dudit message MAR ré-encodé à destination du voisinage du dispositif, à l'instar d'un dispositif pair qui mettrait en oeuvre un traitement 210 pour élaborer et émettre un message de demande d'affiliation MAR pour son propre compte. Ainsi, le dispositif relayeur transmet une demande d'affiliation pour le compte d'autrui. L'étape 208 consiste alors avantageusement à enregistrer, en outre, dans les moyens de mémorisation la valeur de l'identifiant IDa du noeud pour lequel il relaie le message MAR.

Un dispositif conforme à l'invention peut en outre relayer également tout message MAA accusant réception d'un message MAR, ledit message MAA ayant été préalablement élaboré et émis par un dispositif tiers agissant en tant que head ou membre d'une grappe par la mise en oeuvre notamment des étapes 204 et 205 d'un traitement 200 conforme à l'invention. Pour cela, l'invention prévoit que le traitement 200 mis en oeuvre par un dispositif relayeur de messages MAA, comporte une étape 209 pour décoder un message MAA. Cette étape consiste notamment à déterminer la valeur de l'identifiant IDa du dispositif destinataire du message MAA, c'est-à-dire l'identifiant du dispositif ayant émis le message MAR originel. Si ladite valeur d'identifiant correspond à celle de l'identifiant enregistrée en 208, alors une itération de l'étape 205 visant à déclencher l'émission d'un message accusant la réception d'une demande d'affiliation est mise en oeuvre afin de propager ledit message MAA. Ainsi, de proche en proche, via un ou plusieurs dispositifs relayeurs conformes à l'invention, le message MAA émis depuis un membre ou un head d'une grappe peut être acheminé au dispositif source de la demande d'affiliation originelle.

Mettant en oeuvre un procédé d'affiliation P100, tel que décrit précédemment, un dispositif, tel que le dispositif 10 décrit à titre d'exemple non limitatif en liaison avec la figure 2, peut aussi devenir noeud affilié à une grappe. En liaison avec la figure 3, pour y parvenir, un tel dispositif, met en oeuvre un traitement 210 pour :
- tout d'abord, élaborer et transmettre un message MAR de demande d'affiliation à une grappe puis,
- en réponse à ladite demande d'affiliation, prendre en considération un message MAA accusant réception de ladite demande d'affiliation, un tel message MAA ayant été élaboré par un dispositif tiers membre ou head d'une grappe, ledit dispositif tiers mettant également un procédé P100 selon l'invention, plus précisément un traitement 200 et transmis à destination du dispositif requérant l'affiliation, éventuellement par l'intermédiaire d'un ou plusieurs dispositifs libres et/ou affiliés.

Comme évoqué précédemment en liaison avec les figures 1 et 2, la mise en oeuvre d'un réseau simple-saut R2 ou d'un réseau multi-sauts R1 conforme à l'invention a pour objectif principal de collecter des informations en lien avec l'environnement des différents noeuds par le biais de capteurs 15. En effet, chaque dispositif communicant 10 est avantageusement apposé contre la paroi d'un conteneur. L'unité de traitement 11 de chaque dispositif communicant 10, agissant selon le contexte en tant que membre ou, grâce à l'invention agissant en tant que noeud affilié, est adaptée pour déclencher l'élaboration et la transmission de messages de service MS encodant des informations environnementales du dispositif. L'unité de traitement 11 d'un dispositif 10 agissant en tant que head est adaptée pour réceptionner de tels messages de services MS, en déduire lesdites informations environnementales émanant d'un ou plusieurs membres ou affiliés et mettre en oeuvre un service, par exemple une transmission longue portée de messages MC via un réseau GPRS ou équivalent à destination d'un serveur RS distant.

Elaborer un message de service MS par un dispositif membre d'un réseau simple-saut ou multi-sauts à partir de mesures délivrées par un ou plusieurs capteurs est en principe connu. En revanche, l'élaboration et l'émission d'un message de service MS par un dispositif affilié, au sens de l'invention, à destination d'un head, nécessitent un traitement innovant 120 d'élaboration et de transmission d'un tel message MS. La figure 3 décrit un exemple de réalisation d'un tel traitement 120.

Ce dernier comporte classiquement, c'est-à-dire à l'instar de celui mis en oeuvre par un noeud membre selon l'art antérieur, une étape 123a pour élaborer un message de service MS et une étape pour émettre ledit message à destination du dispositif agissant en tant que head pour un service S déterminé. Une telle étape 123 est mise en oeuvre à la suite d'une étape 121 préalable pour, par exemple, collecter depuis un capteur 15 une mesure en lien avec la température régnant au sein d'un conteneur contre lequel le dispositif 10 mettant en oeuvre le procédé P100 est apposé.

Une telle étape 123 est également conditionnée à la présence (test symbolisé par l'étape 122 en figure 3) d'un registre, tel que le registre RH inscrit dans la mémoire de données 12 d'un dispositif 10 décrit en liaison avec la figure 2, comportant la valeur d'un identifiant IDHc d'un dispositif ou noeud agissant en tant que head (situation symbolisée par le lien 122-y en figure 3) signifiant que le noeud est membre ou affilié à une grappe. Dans le cas contraire (situation symbolisée par le lien 122-n en figure 3), le traitement s'interrompt en 129 et aucune émission d'un tel message n'est déclenchée.

Selon que ledit registre RH comporte une route ascendante Ru directe, c'est-à-dire que seule une valeur d'identifiant IDHc de head n'est présente dans le registre RH, ou une route ascendante Ru indirecte, c'est-à-dire que ledit registre RH comporte en outre une valeur d'identifiant ID' d'un membre relayeur, le message MS est directement transmis audit head ou audit membre relayeur.

Par ailleurs, une telle émission 123 d'un message de service MS peut être aussi déclenchée par la réception 121b d'un message de service MS émanant d'un membre d'une même grappe et adressé au dispositif 10, qui met en oeuvre ledit procédé d'affiliation P100 et agit en tant que membre relayeur. Suite à la réception d'un tel message de service émanant d'un membre d'une même grappe, l'étape 121b peut donc comporter une étape pour recevoir et décoder un tel message MS, voire pour enregistrer temporairement dans la mémoire 12, les données contenues dans ledit message de service MS décodé. Le relai dudit message MS peut se traduire ainsi par une réémission dudit message MS en temps différé.

Selon un premier mode de réalisation préféré il peut être pertinent que préalablement à l'émission d'un message de service, un dispositif communicant agissant en tant que noeud affilié à une grappe valide la continuité de son affiliation. En effet, la grappe à laquelle est affilié ledit dispositif peut avoir été détruite, par exemple, sous l'initiative du head ou à la suite d'une modification de la configuration mutuelle des noeuds.

Le traitement 120 comporte ainsi une étape de test 124 visant à déterminer si le dispositif agit en tant que noeud membre ou noeud affilié. Cet état peut être déterminé par exemple par la lecture d'un indicateur d'état booléen, dont la valeur courante est enregistrée dans la mémoire de données 12 du dispositif ou par tout autre technique. Un tel indicateur d'état peut ainsi prendre alternativement deux valeurs prédéterminées décrivant respectivement que le noeud est « membre voire head » ou « affilié ». Ainsi, l'étape 215 du traitement 210 peut en outre consister à mettre à jour ledit indicateur d'état pour spécifier que le dispositif est, jusqu'à preuve du contraire, un noeud affilié. Dans le cas où ledit indicateur d'état atteste que le noeud est membre d'une grappe (situation illustrée par le lien 124-n en figure 3), l'étape 123 est mise en oeuvre dès qu'un message MS est élaboré en 123a. En revanche, dans le cas où ledit indicateur d'état atteste qu'un noeud est affilié (situation illustrée par le lien 124-y en figure 3), le traitement 120 comporte une étape 125 pour élaborer un message MAS de vérification de persistance de son affiliation et déclencher l'émission dudit message par les premiers moyens de communication 13. L'objet d'un tel message MAS consiste à vérifier en une étape subséquente 126 que le noeud membre ayant préalablement répondu favorablement à la demande d'affiliation est toujours membre de la même grappe, c'est-à-dire rattachée au même noeud head. Comme l'indique à titre d'exemple non limitatif la figure 3, un message MAS élaboré et transmis en 125 comporte avantageusement deux champs MAS-1 et MAS-2 pour encoder respectivement la valeur de l'identifiant IDm du dispositif destinataire dudit message MAS et la valeur de l'identifiant IDa du dispositif affilé. Un tel message MAS pourrait encoder sous la forme d'un champ additionnel MAS-3 d'autres informations complémentaires IMs.

A l'instar du traitement 210 qui comporte une étape 213 d'attente de la réception d'un message accusant réception d'une demande d'affiliation, le traitement 120 comporte une étape 126 d'attente de réception d'un message MAA, accusant réception du message MAS, élaboré et émis par le noeud destinataire du message MAS.

En effet, le traitement 200 mis en oeuvre par un dispositif ayant précédemment répondu favorablement à une demande d'affiliation, peut comporter avantageusement une étape 202a pour décoder un message MAS de vérification d'affiliation réceptionné préalablement en 201a par les premiers moyens de communication. L'étape 202a peut consister à décoder ledit message de vérification MAS pour en déduire la valeur de l'identifiant IDa du dispositif source du message MAS ainsi que la valeur d'identifiant du dispositif destinataire dudit message. Lorsque cette dernière correspond à la valeur de l'identifiant dédié audit dispositif mettant en oeuvre le traitement 200, ce dernier considère que le message MAS lui est destiné.

Si en 203, le dispositif détecte qu'il est membre d'une grappe (situation illustrée par le lien 203-a en figure 3), le dispositif met en oeuvre les étapes 204 puis 205 pour élaborer puis émettre par les premiers moyens de communication 13, un message MAA accusant réception du message MAS, à l'instar d'un message MAA élaboré puis émis en réponse à la réception d'un message de demande d'affiliation MAR auquel le dispositif répond favorablement. Dans le cas contraire (situation illustrée par le lien 203-b en figure 3), le dispositif demeure muet en 207. Le traitement 200 s'interrompt.

Du côté du dispositif affilié, une durée maximale d'attente à l'étape 126 d'un tel message MAA peut être paramétrée ou déterminée de sorte qu'à l'issue d'un temps donné, le dispositif affilié considère (situation symbolisée par le lien référencé 126-n sur la figure 3) qu'il n'est plus affilié à la grappe. Le traitement 120 est ainsi interrompu à l'étape 129. Le dispositif redevient noeud libre. Une telle étape 129 peut consister notamment à effacer le registre RH. Elle peut en outre consister à plonger le dispositif en sommeil ou en veille durant une période temporelle déterminée selon une technique WOR par exemple.

L'invention prévoit, en variante ou en complément, qu'un message de perte d'affiliation MAAR puisse être élaboré puis émis par un dispositif électronique communicant en lieu et place d'un « silence » ou d'une non-émission d'un message MAA, en réaction à la réception d'un message MAS de vérification d'affiliation lorsque le destinataire dudit message MAS n'est plus membre d'une grappe. Pour cela, un tel dispositif peut, à l'étape 207, élaborer un message de perte d'affiliation MAAR et en déclencher l'émission par les premiers moyens de communication.

Une telle élaboration de message MAAR peut consister à encoder :
- la valeur de l'identifiant IDa en tant que valeur d'identifiant de dispositif destinataire du message MAAR ;
- la valeur de l'identifiant IDm du dispositif en tant que valeur d'identifiant de dispositif source dudit message MAAR.

Un tel message peut comporter, à l'instar des autres messages MAR, MAA, MAS ou MS, une information additionnelle typant ledit message.

Selon cette variante, lorsque durant l'étape 126, un message MAAR est réceptionné puis décodé, attestant que la valeur de l'identifiant du dispositif destinataire est égale à celle de l'identifiant IDa du dispositif source du message MAS et que la valeur de l'identifiant source dudit message MAAR correspond à celle de l'identifiant de dispositif destinataire du message MAS, le traitement 120 se termine en 129, comme décrit précédemment. Le dispositif précédemment affilié redevient noeud libre.

Lorsque durant l'étape 126, un message MAA accusant réception du message MAS est réceptionné par les premiers moyens de communication 13, ledit message MAA est décodé pour en déduire notamment la teneur des champs MAA-1, MAA-2 et MAA-3 et ainsi connaître la valeur de l'identifiant IDm du dispositif source du message MAA, la valeur de l'identifiant IDa du noeud affilié et celle de l'identifiant IDHc du noeud head de la grappe. L'étape 126 permet ainsi de vérifier (situation symbolisée par le lien référencé 126-y sur la figure 3) que le noeud affilié est bien le destinataire du message MAA, que ce dernier a bien été émis par le noeud membre ayant répondu favorablement à la demande d'affiliation et que la grappe est toujours rattachée au même head. L'étape 126 peut en outre déduire du message MAA, la valeur d'une capacité, par exemple encodée dans le champ MAA-5 ou MAA-6, du head à assurer un service particulier. Ainsi, l'invention prévoit un mode de réalisation pour lequel le noeud affilié peut confirmer ou infirmer que ladite capacité est suffisante au regard de critères préétablis. L'étape 126 peut consister en outre à mettre à jour le registre RH dans la mémoire de données 12 pour mettre à jour la valeur courante CHc de ladite capacité. Dans la négative, l'étape 129 est mise en oeuvre et le noeud affilié met fin de lui-même à son affiliation. Si le message MAA est bien conforme aux attentes du noeud affilié confirmant ainsi la continuité de l'affiliation, l'étape 123 déclenchant l'émission du message de service MS est mise en oeuvre.

Nous avons vu précédemment, en lien avec le traitement 210, que l'invention prévoit que la puissance d'émission d'un message de demande d'affiliation MAR puisse être progressive. Avantageusement, il en est de même pour l'émission d'un message MAS. L'objectif recherché par ce mode de réalisation est ainsi de préserver les ressources énergétiques des moyens 17 du dispositif affilié. Pour mettre en oeuvre une telle progressivité, la puissance d'émission d'un message MAS peut être tout d'abord paramétrée par l'unité de traitement pour transmettre, à faible portée, ledit message MAS. Une première itération de l'étape 125 consiste ainsi à paramétrer la puissance d'émission à une valeur plancher P'min. A l'issue de la durée maximale d'attente prévue à l'étape 126, si aucun message MAS n'est réceptionné (situation symbolisée par le lien référencé 126-n sur la figure 3), l'étape 129 n'est pas automatiquement mise en oeuvre comme pour le précédent mode de réalisation. En lieu et place, le traitement 120 consiste à déclencher une nouvelle itération de l'étape 125 et ainsi émettre à nouveau le message MAS avec une puissance d'émission accrue P'min+. Cet accroissement est réalisé par l'unité de traitement mettant en oeuvre le traitement 120 en une étape 127, par exemple selon un facteur multiplicatif donné ou un pas incrémental déterminé appliqué à la puissance plancher P'min. Si à l'issue de la durée maximale prévue à l'étape 126, aucun message MAA n'est réceptionné (situation symbolisée par le lien référencé 126-n sur la figure 3), le traitement 120 peut déclencher une nouvelle itération de l'étape 125. Une ou plusieurs itérations des étapes 127 et 125 peuvent ainsi se succéder tant qu'aucun message MAS n'est réceptionné et tant que la puissance P'min+ demeure inférieure à une puissance maximale P'max d'émission d'un message MAS (situation symbolisée par le lien référencé 128-n sur la figure 3). Lesdites itérations cessent dès qu'en 128 la puissance maximale d'émission d'un message MAS est atteinte (situation symbolisée par le lien référencé 128-y sur la figure 3). Dans ce cas, le traitement 120 s'interrompt en 129.

L'invention prévoit qu'en outre, la durée d'attente maximale prévue à l'étape 126 puisse également être progressive et révisée à chaque itération à l'étape 127.

Par ailleurs, afin de préserver les ressources énergétiques, telles que les moyens 17 décrits en liaison avec la figure 2, des noeuds d'un réseau conforme à l'invention, celle-ci prévoit que les relais ou primo-émissions de messages notamment de demande d'affiliation MAR, de vérification d'affiliation MAS, accusant réception MAA des précédents messages ou encore de messages de service MS, puissent être conditionnés au sein d'un dispositif électronique communicant agissant en tant que noeud membre, affilié ou libre dudit réseau à un ou plusieurs seuils minimaux (par exemple, selon le type de message ou encore, selon que ledit message soit relayé ou primo-émis) en lien avec la capacité restante en énergie électrique des moyens 17 dudit dispositif électronique communicant. Ainsi, en liaison avec la figure 3, l'invention prévoit que les étapes pour émettre un message, à savoir de manière non limitative, les étapes 212, 125, 123, 205 ou encore 208 comportent chacune ou pour partie une étape préalable consistant à tester la capacité énergétique restante par rapport au seuil minimal concerné. Si ladite capacité restante est supérieure audit seuil, l'émission du message est déclenchée. Dans le cas contraire le dispositif mettant en oeuvre un procédé d'affiliation conforme à l'invention demeure muet. Une telle variante de réalisation permet, par exemple, de privilégier l'émission de messages de service MS au regard des messages d'administration MAR, MAS, MAA, du réseau.

Selon un deuxième mode de réalisation préféré, l'invention prévoit qu'un membre puisse préalablement à l'envoi d'un message de service (MS) ou plus généralement d'un message relayé, à l'instar d'un noeud affilié, élaborer un message MAS de vérification, non plus de la persistance de son affiliation, mais de la persistance de son adhésion à la grappe, à destination de la tête de grappe ou head. Un tel message MAS comporte un premier champ MAS-1 encodant l'identifiant du head et un champ MAS-2 encodant l'identifiant du noeud membre source dudit message MAS. Le head peut, au même titre qu'un noeud membre ayant répondu favorablement à une demande d'adhésion, émettre un message MAA accusant réception du message de vérification MAS et attestant du maintien de son rôle de head. Un tel message MAA peut en outre comporter des champs MAA-6, MAA-7, pour par exemple mettre à jour les valeurs de capacités courantes CHc1, CHc2, dudit head à assurer tel ou tel service. Il comporte un champ MAA-1 encodant l'identifiant du head source dudit message et un champ MAA-2 encodant l'identifiant du noeud destinataire du message. Selon ce deuxième mode de réalisation préféré, l'étape 124 visant à dissocier un noeud membre d'un noeud affilié peut ne plus être mise en oeuvre. En effet, tout noeud membre ou affilié vérifie la persistance d'appartenance à une grappe avant d'émettre un message notamment à destination de la tête de ladite grappe, en envoyant un message de vérification d'appartenance à la grappe MAS, et en réceptionnant un message MAA accusant réception dudit message de vérification d'appartenance à la grappe et attestant de l'appartenance à la grappe émis en réponse à la réception du message MAS par le destinataire dudit message.

A l'instar d'un noeud affilié, tout noeud membre ou affilié peut recevoir un message de perte d'appartenance à la grappe à l'image d'un message MAAR de perte d'affiliation, élaboré puis émis par un dispositif électronique communicant, en lieu et place d'un « silence » ou d'une non-émission d'un message MAA, en réaction à la réception d'un message MAS de vérification d'appartenance à la grappe lorsque le destinataire dudit message MAS n'appartient plus à la grappe.

L'invention prévoit en variante ou en complément qu'une fois qu'un noeud membre a répondu favorablement à une demande d'affiliation, le noeud affilié peut avantageusement se comporter de manière similaire ou analogue qu'un noeud membre ayant rejoint la grappe à la suite d'un message d'enrôlement MH. Le noeud affilié peut ainsi recevoir des message de demande d'affiliation MAR et répondre avantageusement à une demande d'affiliation en élaborant et en émettant un message MAA, accusant réception dudit message de demande d'affiliation MAR.

En variante l'invention prévoit qu'un noeud affilié ne puisse pas répondre directement favorablement à une demande d'affiliation, mais agisse comme relayeur de ladite demande afin qu'un membre d'une grappe puisse éventuellement accéder à la demande d'affiliation. Le noeud affilié peut de la même manière relayer la réponse d'un membre d'une grappe à la demande d'affiliation vers le noeud source de la demande d'affiliation.

Quelle que soit la configuration d'un procédé P100 d'adhésion à une grappe, ledit procédé étant conforme à l'invention, un mode d'adaptation préférée d'un dispositif électronique communicant, tel que celui décrit en liaison avec la figure 2, consiste à enregistrer ou télécharger en mémoire de programmes 14, un programme d'ordinateur P, comportant une pluralité d'instructions de programme qui, lorsqu'elles sont exécutées ou interprétées par l'unité de traitement dudit dispositif, provoque la mise en oeuvre dudit procédé P100.

L'invention a été décrite au travers d'un exemple d'application préférée en lien avec le suivi de conteneurs de biens, de marchandises solides, fluides ou liquides, lesdits conteneurs coopérant respectivement avec des dispositifs électroniques communicants, tel que le dispositif 10 selon la figure 2, mettant en oeuvre un procédé d'affiliation, tel que le procédé P100 illustré en figure 3, lesdits dispositifs comportant chacun un capteur coopérant avec une unité de traitement pour mesurer et collecter une grandeur en lien avec les environnements interne et/ou externe desdits conteneurs.

De tels dispositifs pourraient être exploités pour une toute autre application distincte de celle visant à émettre des données collectées selon une liaison longue distance. Ils pourraient également, en variante ou en complément, assurer un ou plusieurs autres services. Pour cela, comme nous l'avons évoqué précédemment, la mémoire de données 12 de chaque dispositif peut comporter, non pas un seul registre RH dédié à un service déterminé S, mais une pluralité de registres RHn, formant une table, chaque registre étant dédié à un service particulier Sn. Les messages de demande d'affiliation MAR ou de service MS comporteraient, selon cette variante, une information permettant d'identifier le service Sn déterminé et concerné par chacun desdits messages. Pour cela, les étapes 211, 123a d'un procédé d'affiliation P100 conforme à l'invention seraient notamment adaptées pour encoder ladite information permettant d'identifier le service Sn.

En outre, l'invention prévoit qu'un dispositif communicant puisse en réception à une demande d'affiliation par le biais d'un message MAR, être affilié à une pluralité de grappes pour un même service. Ainsi, une pluralité de registres RHm forme une table, chaque registre étant dédié à un head particulier. Selon cette variante, un dispositif ainsi pluri-affilié peut choisir d'émettre un message de service MS à destination de l'un desdits heads. Un tel choix peut être basé sur les capacités respectives des heads à assurer le service, voire encore, de manière non limitative, sur les éloignements respectifs desdits heads en nombre de sauts. Pour mettre en oeuvre une telle pluri-affiliation, l'étape 123a pour élaborer un message de service peut encoder avantageusement la valeur de l'identifiant du head le mieux en capacité ou le plus proche du dispositif comme valeur d'identifiant du destinataire dudit message de service. Les valeurs respectives des capacités desdits heads peuvent en effet être mises à jour, par exemple, au gré des messages MAA réceptionnés et décodés à l'étape 126 du traitement 120, tel que décrit en liaison avec la figure 3. Le dispositif affilié peut ainsi arbitrer entre les grappes auxquelles il est affilié selon différents critères, tels qu'à titre d'exemples non limitatifs, la capacité du head, l'éloignement en nombre de sauts dudit head, etc.

Par ailleurs, l'invention concerne ainsi tout système comportant une pluralité de dispositifs électroniques communicants conformes à l'invention. Plus particulièrement, l'invention concerne tout système de traçabilité de conteneurs sur une aire de stockage ou une plateforme de transport, ledit système comportant en outre une entité distante pour collecter et exploiter des messages MC émis depuis un ou plusieurs desdits dispositifs lorsqu'ils agissent en tant que tête de grappe. Un tel système présente des performances, en matière d'autonomie énergétique, de robustesse et d'adaptabilité aux conditions d'exploitation inégalées et sans comparaison possible par rapport à celles conférées par les solutions connues, telles, qu'à titre d'exemple, le procédé LEACH. En effet, grâce à l'invention, l'exploitation de têtes de grappe, depuis leurs élections, jusqu'à la réalisation de la ou des actions concernées par un service déterminé, est optimale, prévenant toute communication superflue ou inefficace au sein du réseau ou à destination d'entités tierces.

## Revendications

1. Procédé (P100) mis en oeuvre par une unité de traitement (11) d'un premier dispositif électronique communicant (10) comportant en outre une mémoire de données (12), des premiers moyens de communication (13) assurant une communication de proximité sans fil avec tout autre dispositif électronique communicant (10i) situé à portée de communication au sein d'une grappe (C1, C2) comprenant une pluralité de dispositifs électroniques communicants (10, 10i, a1,...,a8, b1,...,b8, ..., j1,...,j5), ladite mémoire (12) et lesdits moyens de communication (13) coopérant avec ladite unité de traitement (11), la mémoire de données (12) mémorisant la valeur d'un identifiant (ID, IDm, IDa) dédié au premier dispositif électronique communicant (10) et un registre (RH) agencé pour comporter la valeur courante (IDHc) d'un identifiant (IDH) d'un dispositif électronique communicant (d2, h3) agissant en tant que tête de grappe (C1, C2), ledit procédé (P100) comportant une étape (123) pour émettre un message de service (MS) à destination du dispositif agissant en tant que tête de grappe, et étant **caractérisé en ce qu'**il comporte :
- une étape (125) préalable à l'émission (123) du message de service (MS) pour élaborer et émettre, par les premiers moyens de communication (13), un message (MAS) de vérification d'appartenance à la grappe, ledit message encodant :
i. la valeur (MAS-1) de l'identifiant d'un deuxième dispositif électronique communicant en tant qu'identifiant du dispositif électronique communicant destinataire dudit message (MAS) de vérification d'appartenance à la grappe ;
ii. la valeur (MAS-2) de l'identifiant du premier dispositif en tant qu'identifiant du dispositif électronique communicant source dudit message (MAS) de vérification d'appartenance à ladite grappe.
- une étape (126), mise en oeuvre si et seulement si un message (MAA) accusant réception dudit message de vérification d'appartenance à la grappe est reçu avant l'expiration d'une durée maximale d'attente déterminée à compter de l'émission du message (MAS) de vérification d'appartenance à la grappe, pour décoder ledit message (MAA) accusant réception et en déduire :
i. la valeur (MAA-2) de l'identifiant du dispositif destinataire dudit message (MAA) accusant réception du message (MAS) de vérification d'appartenance à la grappe ;
ii. la valeur (MAA-1) de l'identifiant du dispositif source dudit message (MAA) accusant réception du message (MAS) de vérification d'appartenance à la grappe ;
L'étape (123) pour émettre un message de service (MS) n'étant mises en oeuvre que si (126-y) :
- la valeur déduite (MAA-2) de l'identifiant du dispositif destinataire du message (MAA) accusant réception du message (MAS) de vérification d'appartenance à la grappe est égale à celle de l'identifiant du premier dispositif électronique communicant ;
- la valeur déduite (MAA-1) de l'identifiant du dispositif source dudit message (MAA) accusant réception du message (MAS) de vérification d'appartenance à la grappe est égale à celle de l'identifiant du deuxième dispositif électronique communicant.

2. Procédé selon la revendication précédente, pour lequel l'étape préalable à l'émission du message de service (MS) pour élaborer et émettre, par les premiers moyens de communication (13), un message (MAS) de vérification d'appartenance à la grappe n'est mise en oeuvre (124-y) que si une étape de test (124) atteste que le dispositif est affilié à la grappe (C1, C2).

3. Procédé (P100) selon l'une des revendications précédentes comportant :
- une étape (201) pour recevoir un message de demande d'affiliation (MAR) élaboré et émis par un troisième dispositif électronique communicant (c5, i5) demandant une affiliation à une grappe (C1, C2), ledit message de demande d'affiliation (MAR) comportant la valeur de l'identifiant (IDa) dudit troisième dispositif (c5, i5) demandant une affiliation ;
- une étape (202) pour décoder ledit message de demande d'affiliation (MAR) et pour en déduire la valeur dudit identifiant (IDa) dudit troisième dispositif demandant une affiliation ;
- une étape (204) pour élaborer un message (MAA) accusant réception de la demande d'affiliation consistant à encoder (MAA-1, MAA-2, MAA-3) au sein dudit message (MAA) :
i. la valeur de l'identifiant (ID) du premier dispositif en tant qu'identifiant de dispositif source dudit message (MAA) accusant réception de la demande d'affiliation,
ii. la valeur de l'identifiant (IDa) du troisième dispositif demandant une affiliation en tant qu'identifiant de dispositif destinataire dudit message (MAA) accusant réception de la demande d'affiliation,
iii. la valeur courante (IDHc) de l'identifiant (IDH) d'un quatrième dispositif électronique communicant agissant en tant que tête de grappe, ladite valeur (IDHc) étant lue dans le registre (RH),
- une étape (205) pour déclencher l'émission par les premiers moyens de communication (13) du message (MAA) accusant réception de la demande d'affiliation.

4. Procédé (P100) selon la revendication précédente, pour lequel l'étape (204) pour élaborer un message (MAA) accusant réception de la demande d'affiliation consiste en outre à encoder (MAA-6, MAA-7) une valeur (CHc1, CHc2) décrivant une capacité (CH1, CH2) du quatrième dispositif électronique communicant (d2, h3) agissant en tant que tête de grappe (C1, C2) à assurer un service, ladite valeur étant enregistrée dans le registre (RH) mémorisant en outre la valeur courante (IDHc) de l'identifiant (IDH) dudit quatrième dispositif électronique communicant (d2, h3) agissant en tant que tête de grappe (C1, C2).

5. Procédé (P100) selon l'une quelconque des revendications précédentes, pour lequel l'étape (205) pour déclencher l'émission, par les premiers moyens de communication (13), du message (MAA) accusant réception de la demande d'affiliation n'est accomplie que si (203-a) la mémoire de données (12) mémorise un registre (RH) comportant une valeur courante (IDHc) d'un identifiant (IDH) d'un dispositif électronique communicant (d2, h3) agissant en tant que tête de grappe (C1, C2).

6. Procédé (P100) selon l'une quelconque des revendications précédentes, comportant :
- une étape pour élaborer (211) un message de demande d'affiliation (MAR) consistant à encoder (MAR-1) la valeur de l'identifiant (ID, IDa) du premier dispositif (c5, i5) en tant qu'identifiant d'un dispositif demandant une affiliation à une grappe ;
- une étape (212) pour déclencher l'émission par les premiers moyens de communication (13) dudit message de demande d'affiliation (MAR) ;
- une étape (213) pour recevoir par les moyens de communication (13) un message (MAA) élaboré et émis par un cinquième dispositif (10i) accusant réception du message de demande d'affiliation (MAR) ;
- une étape (214), mise en oeuvre si et seulement si (213, 213-y) ledit message (MAA), accusant réception du message de demande d'affiliation (MAR), est reçu avant l'expiration d'une durée maximale d'attente déterminée à compter de l'émission dudit message de demande d'affiliation (MAR), pour décoder ledit message (MAA) accusant réception du message de demande d'affiliation et en déduire :
i. la valeur de l'identifiant (MAA-2, IDa) du dispositif destinataire dudit message (MAA) accusant réception d'une demande d'affiliation ;
ii. la valeur de l'identifiant (MAA-3, IDH) d'un sixième dispositif électronique communicant agissant en tant que tête de grappe à laquelle appartient le cinquième dispositif source dudit message (MAA) accusant réception d'une demande d'affiliation ;
- une étape (215), mise en oeuvre si et seulement si ladite valeur déduite (MAA-2) de l'identifiant du dispositif destinataire est égale à celle de la valeur de l'identifiant (ID) du premier dispositif demandant une affiliation, pour inscrire dans le registre (RH), la valeur déduite de l'identifiant (IDH) du sixième dispositif électronique communicant agissant en tant que tête de grappe, en tant que valeur courante (IDHc) d'identifiant de dispositif agissant en tant que tête de grappe.

7. Procédé (P100) selon la revendication précédente, pour lequel :
- l'étape (214) pour décoder le message (MAA) accusant réception du message de demande d'affiliation consiste en outre à déduire (MAA-1) dudit message (MAA) la valeur de l'identifiant (IDm) du cinquième dispositif électronique communicant source dudit message (MAA) ;
- l'étape (215) pour mettre à jour le registre (RH) consiste en outre à y enregistrer ladite valeur d'identifiant déduite en tant qu'identifiant d'un dispositif électronique communicant sur une route ascendante (Ru) séparant le premier dispositif électronique communicant demandant une affiliation du sixième dispositif électronique communicant agissant en tant que tête de grappe.

8. Procédé (P100) selon l'une quelconque des revendications précédentes, comportant une étape préalable à l'étape pour émettre un message de service (MS) à destination d'un dispositif agissant en tant que tête de grappe pour élaborer (123a) et déclencher (123), par les premiers moyens de communication (13), l'émission du message de service (MS) à destination du dispositif électronique communicant dont la valeur d'identifiant (IDH) est mémorisée, en tant que valeur courante (IDHc) d'identifiant du dispositif électronique communicant agissant en tant que tête de grappe, par le registre (RH).

9. Programme d'ordinateur (P) comportant une pluralité d'instructions de programme qui, lorsqu'elles sont :
- préalablement enregistrées dans une mémoire de programmes (14) d'un dispositif électronique (10) comportant en outre une unité de traitement (11), des premiers moyens de communication (13) assurant une communication de proximité sans fil avec tout autre dispositif électronique (10i) situé à portée de communication, une mémoire de données (12) enregistrant la valeur d'un identifiant (ID) dédié au dispositif et un registre (RH) pour comporter la valeur courante d'un identifiant d'un dispositif agissant en tant que tête de grappe, lesdites mémoires (12, 14) et lesdits premiers moyens de communication (13) coopérant avec ladite unité de traitement (11) ;
- exécutées ou interprétées par ladite unité de traitement (11),
provoque la mise en oeuvre d'un procédé d'affiliation (P100) selon l'une quelconque des revendications précédentes.

10. Dispositif électronique (10) comportant une unité de traitement (11), une mémoire de données (12), une mémoire de programmes (14), des premiers moyens de communication (13) assurant une communication de proximité sans fil avec tout autre dispositif électronique (10i) situé à portée de communication, lesdites mémoires (12, 14) et premiers moyens de communication (13) coopérant avec ladite unité de traitement (11), la mémoire de données (12) comportant la valeur d'un identifiant (ID) dédié au dispositif et un registre (RH) pour comporter la valeur courante d'un identifiant d'un dispositif agissant en tant que tête de grappe, ledit dispositif (10) étant **caractérisé en ce qu'**il comporte dans la mémoire de programmes (14), les instructions d'un programme (P) selon la revendication précédente.

11. Système comportant une pluralité de dispositifs électroniques communicants (10, 10i) conformes à la revendication précédente.

12. Système selon la revendication précédente comportant une pluralité de conteneurs de biens, de marchandises solides, fluides ou liquides, lesdits conteneurs coopérant respectivement avec les dispositifs électroniques communicants (10, 10i), ces derniers comportant chacun un capteur (15) coopérant avec l'unité de traitement (11) pour mesurer et collecter une grandeur en lien avec les environnements interne et/ou externe desdits conteneurs.

## Patentansprüche

1. Verfahren (P100), das von einer Verarbeitungseinheit (11) einer ersten kommunizierenden elektronischen Vorrichtung (10) implementiert wird, die ferner einen Datenspeicher (12) und erste Kommunikationsmittel (13) umfasst, die eine drahtlose Näherungskommunikation mit jeder anderen kommunizierenden elektronischen Vorrichtung (10i) bereitstellen, die in einem Kommunikationsbereich innerhalb eines Clusters (C1, C2), eine Vielzahl von kommunizierenden elektronischen Vorrichtungen (10, 10i, a1,...., a8, b1,..., b8, ..., j1,..., j5) umfassend, platziert ist, wobei der Speicher (12) und die Kommunikationsmittel (13) mit der Verarbeitungseinheit (11) zusammenwirken, wobei der Datenspeicher (12) den Wert einer Kennung (ID, IDm, IDa), die der ersten kommunizierenden elektronischen Vorrichtung (10) und einem Register (RH) zugeordnet ist, speichert, um den aktuellen Wert (IDHc) einer Kennung (IDH) einer kommunizierenden elektronischen Vorrichtung (d2, h3) zu beinhalten, die als Clusterkopf (C1, C2) wirkt, wobei das Verfahren (P100) einen Schritt (123) zum Senden einer Dienstnachricht (MS) an die als Clusterkopf wirkende Vorrichtung beinhaltet, und **dadurch gekennzeichnet ist, dass** es Folgendes beinhaltet:
- einen Schritt (125) vor dem Senden (123) der Dienstnachricht (MS) zum Erzeugen und Senden einer Verifizierungsnachricht (MAS) der Zugehörigkeit zu dem Cluster durch die ersten Kommunikationsmittel (13), wobei die Nachricht Folgendes kodiert:
i. den Wert (MAS-1) der Kennung einer zweiten kommunizierenden elektronischen Vorrichtung als die Kennung der kommunizierenden elektronischen Vorrichtung, die die Verifizierungsnachricht (MAS) der Zugehörigkeit zu dem Cluster empfängt;
ii. den Wert (MAS-2) der Kennung der ersten Vorrichtung als Kennung der kommunizierenden elektronischen Vorrichtung, die die Quelle, der Verifizierungsnachricht (MAS) der Zugehörigkeit zu dem Cluster ist
- einen Schritt (126), der ausgeführt wird, wenn und nur wenn eine Nachricht (MAA), die den Empfang der Nachricht bestätigt, die die Zugehörigkeit zu dem Cluster verifiziert, vor dem Ablauf einer maximalen Wartezeit, die durch das Senden der Nachricht (MAS), die die Zugehörigkeit zu dem Cluster verifiziert, bestimmt wird, empfangen wird, um die Nachricht (MAA) zu entschlüsseln, die den Empfang bestätigt, und daraus Folgendes abzuleiten:
i. den Wert (MAA-2) der Kennung der Vorrichtung, die die Nachricht (MAA) empfängt, die den Empfang der Nachricht (MAS), die die Zugehörigkeit zu dem Cluster verifiziert, bestätigt;
ii. den Wert (MAA-1) der Kennung der Quellvorrichtung der Nachricht (MAA), die den Empfang der Nachricht (MAS) bestätigt, die die Zugehörigkeit zu dem Cluster verifiziert;
der Schritt (123) zum Senden einer Dienstnachricht (MS) nur dann ausgeführt wird, wenn (126-y):
- der abgeleitete Wert (MAA-2) der Kennung der Vorrichtung, die die Nachricht (MAA) empfängt, die den Empfang der Nachricht (MAS), die die Zugehörigkeit zu dem Cluster verifiziert, bestätigt, dem Wert der Kennung der ersten kommunizierenden Vorrichtung entspricht;
- der abgeleitete Wert (MAA-1) der Kennung der Quellvorrichtung der Nachricht (MAA), die den Empfang der Nachricht (MAS), die die Zugehörigkeit zu dem Cluster verifiziert, bestätigt, dem Wert der Kennung der zweiten kommunizierenden Vorrichtung entspricht.

2. Verfahren nach dem vorhergehenden Anspruch, wobei der Schritt vor dem Senden der Dienstnachricht (MS) zum Erzeugen und Senden einer Nachricht (MAS), die die Zugehörigkeit zu dem Cluster verifiziert, durch die ersten Kommunikationsmittel (13) nur dann ausgeführt wird (124-y), wenn ein Prüfschritt (124) zeigt, dass die Vorrichtung dem Cluster (C1, C2) zugehörig ist.

3. Verfahren (P100) nach einem der vorhergehenden Ansprüche, Folgendes beinhaltend:
- einen Schritt (201) zum Empfangen einer Zugehörigkeit anfragenden Nachricht (MAR), die von einer dritten elektronischen kommunizierenden Vorrichtung (c5, i5), die die Zugehörigkeit zu einem Cluster (C1, C2) anfragt, erzeugt und gesendet wird, wobei die Zugehörigkeitsanfragenachricht (MAR) den Wert der Kennung (IDa) der dritten Vorrichtung (c5, i5), die eine Zugehörigkeit anfragt, beinhaltet;
- einen Schritt (202) zum Decodieren der Zugehörigkeitsanfragenachricht (MAR) und zum Ableiten des Wertes der Kennung (IDa) der dritten Vorrichtung davon, die die Zugehörigkeit anfragt;
- einen Schritt (204) zum Erzeugen einer Nachricht (MAA), die den Empfang der Zugehörigkeitsanfrage bestätigt, die aus Codieren (MAA-1, MAA-2, MAA-3) von Folgendem in der Nachricht (MAA) besteht:
i. den Wert der Kennung (ID) der ersten Vorrichtung als Kennung der Quellvorrichtung der Nachricht (MAA), die den Empfang der Zugehörigkeitsanfrage bestätigt,
ii. den Wert der Kennung (IDa) der dritten Vorrichtung, die die Zugehörigkeit anfragt, als Kennung der Vorrichtung, die die Nachricht (MAA) empfängt, die den Empfang der Zugehörigkeitsanfrage bestätigt,
iii. den aktuellen Wert (IDHc) der Kennung (IDH) einer vierten kommunizierenden elektronischen Vorrichtung, die als Clusterkopf wirkt, wobei der Wert (IDHc) in dem Register (RH) gelesen wird,
- einen Schritt (205) zum Auslösen des Sendens durch die ersten Kommunikationsmittel (13) der Nachricht (MAA), die den Empfang der Zugehörigkeitsanfrage bestätigt.

4. Verfahren (P100) nach dem vorhergehenden Anspruch, wobei der Schritt (204) des Erzeugens einer Nachricht (MAA), die den Empfang der Zugehörigkeitsanfrage bestätigt, ferner aus dem Codieren (MAA-6, MAA-7) eines Wertes (CHc1, CHc2) besteht, der eine Fähigkeit (CH1, CH2) der vierten kommunizierenden elektronischen Vorrichtung (d2, h3), die als ein Clusterkopf (C1, C2) wirkt, beschreibt, einen Dienst durchzuführen, wobei der Wert in dem Register (RH) aufgezeichnet wird, der ferner den aktuellen Wert (IDHc) der Kennung (IDH) der vierten kommunizierenden elektronischen Vorrichtung (d2, h3) speichert, die als Clusterkopf (C1, C2) wirkt.

5. Verfahren (P100) nach einem der vorhergehenden Ansprüche, wobei der der Schritt (205) zum Auslösen des Sendens der Nachricht (MAA), die den Empfang der Zugehörigkeitsanforderung bestätigt, durch die ersten Kommunikationsmittel (13) nur durchgeführt wird, wenn (203-a) der Datenspeicher (12) ein Register (RH) speichert, das einen aktuellen Wert (IDHc) einer Kennung (IDH) einer kommunizierenden elektronischen Vorrichtung (d2, h3) beinhaltet, die als Clusterkopf (C1, C2) wirkt.

6. Verfahren (P100) nach einem der vorhergehenden Ansprüche, Folgendes beinhaltend:
- einen Schritt zum Erzeugen (211) einer Zugehörigkeitsanfragenachricht (MAR), bestehend aus dem Codieren (MAR-1) des Wertes der Kennung (ID, IDa) der ersten Vorrichtung (c5, i5) als Kennung einer Vorrichtung, die eine Zugehörigkeit zu einem Cluster anfragt;
- einen Schritt (212) zum Einleiten des Sendens der Zugehörigkeitsanfragenachricht (MAR) durch die ersten Kommunikationsmittel (13);
- einen Schritt (213) zum Empfangen einer Nachricht (MAA) durch die ersten Kommunikationsmittel (13), die von einer fünften Vorrichtung (10i) erzeugt und gesendet wird, die den Empfang der Zugehörigkeitsanfragenachricht (MAR) bestätigt;
- einen Schritt (214), der ausgeführt wird, wenn und nur wenn (213, 213-y) die Nachricht (MAA), die den Empfang der Zugehörigkeitsanfragenachricht (MAR) bestätigt, vor dem Ablauf einer maximalen Wartezeit, die durch das Senden der Zugehörigkeitsanforderungsnachricht (MAR) bestimmt wird, empfangen wird, um die nachricht (MAA), die den Empfang der Zugehörigkeitsanfragenachricht bestätigt, zu dekodieren und davon Folgendes abzuleiten:
i. den Wert der Kennung (MAA-2, IDa) der Vorrichtung, die die Nachricht (MAA) empfängt, die den Empfang einer Zugehörigkeitsanfrage bestätigt;
ii. den Wert der Kennung (MAA-3, IDH) einer sechsten kommunizierenden elektronischen Vorrichtung, die als ein Clusterkopf wirkt, dem die fünfte Quellvorrichtung der Nachricht (MAA), die den Empfang einer Zugehörigkeitsanfrage bestätigt, zugehörig ist;
- einen Schritt (215), der ausgeführt wird, wenn und nur wenn der abgeleitete Wert (MAA-2) der der Kennung der empfangenden Vorrichtung dem der Kennung (ID) der ersten Vorrichtung entspricht, die die Zugehörigkeit anfordert, zum Aufzeichnen, in den Register (RH), des abgeleiteten Wertes der Kennung (IDH) der sechsten kommunizierenden elektronischen Vorrichtung, die als Clusterkopf wirkt, als einen aktuellen Wert (IDHc) der Kennung der Vorrichtung, die als Clusterkopf wirkt.

7. Verfahren (P100) nach dem vorhergehenden Anspruch, wobei:
- der Schritt (214) des Decodierens der Nachricht (MAA), die den Empfang der Zugehörigkeitsanfragenachricht bestätigt, ferner aus dem Ableiten (MAA-1) des Wertes der Kennung (IDm) der fünften kommunizierenden elektronischen Vorrichtung, die die Quelle der Nachricht (MAA) ist, aus der Nachricht (MAA) besteht;
- der Schritt (215) des Aktualisierens des Registers (RH) ferner darin besteht, den abgeleiteten Kennungswert darin als Kennung der elektronischen Vorrichtung auf einer Aufwärtsroute (Ru) aufzuzeichnen, die die erste kommunizierende elektronische Vorrichtung, die eine Zugehörigkeit von der sechsten kommunizierenden elektronischen Vorrichtung anfordert, die als Clusterkopf wirkt, trennt.

8. Verfahren (P100) nach einem der vorhergehenden Ansprüche, beinhaltend einen Schritt vor dem Schritt des Sendens einer Dienstnachricht (MS), die für eine Vorrichtung vorgesehen ist, die als Clusterkopf wirkt, zum Erzeugen (123a) und Auslösen (123), durch die ersten Kommunikationsmittel (13), des Sendens der Dienstnachricht (MS), die für eine kommunizierende elektronische Vorrichtung vorgesehen ist, dessen Kennungswert (IDH) als aktueller Kennungswert (IDHc) der kommunizierenden elektronischen Vorrichtung, die als Clusterkopf wirkt, von dem Register (RH) gespeichert wird.

9. Computerprogramm (P) mit einer Vielzahl von Programmbefehlen, die, wenn Folgendes auf sie zutrifft:
- sie sind vorab in einem Programmspeicher (14) einer derartigen elektronischen Vorrichtung (10) gespeichert, die ferner eine Verarbeitungseinheit (11) umfasst, wobei erste Kommunikationsmittel (13) eine drahtlose Näherungskommunikation mit jeder anderen elektronischen Vorrichtung (10i) gewährleisten, die sich innerhalb des Kommunikationsbereichs befindet, wobei ein Datenspeicher (12) den Wert einer Kennung (ID), die der Vorrichtung und einem Register (RH) zugeordnet ist, speichert, um den aktuellen Wert einer Kennung einer Vorrichtung zu beinhalten, die als Clusterkopf wirkt, wobei die Speicher (12, 14) und die ersten Kommunikationsmittel (13) mit der Verarbeitungseinheit (11) zusammenarbeiten;
- sie von der Verarbeitungseinheit (11) ausgeführt oder interpretiert werden,
die Umsetzung eines Zugehörigkeitsverfahrens (P100) nach einem der vorhergehenden Ansprüche bewirken.

10. Elektronische Vorrichtung (10) einschließlich einer Verarbeitungseinheit (11), eines Datenspeichers (12), eines Programmspeichers (14), erster Kommunikationsmittel (13), die eine drahtlose Näherungskommunikation mit jeder anderen elektronischen Vorrichtung (10i) bereitstellen, die sich innerhalb des Kommunikationsbereichs befindet, wobei die Speicher (12, 14) und die ersten Kommunikationsmittel (13) mit der Verarbeitungseinheit (11) zusammenarbeiten, wobei der Datenspeicher (12) den Wert einer Kennung (ID) beinhaltet, die der Vorrichtung und einem Register (RH) zugeordnet ist, um den aktuellen Wert einer Kennung einer als Clusterkopf wirkenden Vorrichtung zu beinhalten, wobei die Vorrichtung (10) **dadurch gekennzeichnet ist, dass** sie im Programmspeicher (14) die Anweisungen eines Programms (P) nach dem vorhergehenden Anspruch beinhaltet.

11. System, eine Vielzahl von derartigen kommunizierenden elektronischen Vorrichtungen (10, 10i) nach dem vorhergehenden Anspruch beinhaltend.

12. System nach dem vorstehenden Anspruch, eine Vielzahl von Behältern mit Gütern, festen, fluiden oder flüssigen Waren beinhaltend, wobei die Behälter jeweils mit den kommunizierenden elektronischen Vorrichtungen (10, 10i) zusammenwirken, wobei letztere jeweils einen Sensor (15) umfassen, der mit der Verarbeitungseinheit (11) zum Messen und Sammeln einer Eigenschaft, bezogen auf die innere und/oder äußere Umgebung der Behälter, zusammenwirkt.

## Claims

1. A method (P100) implemented by a processing unit (11) of a first communicating electronic device (10) further including a data memory (12), first communication means (13) providing nearby wireless communication with any other communicating electronic device (10i) situated within communication range within a cluster (C1, C2) comprising a plurality of communicating electronic devices (10, 10i, a1, ..., a8, b1, ..., b8, ..., j1, ..., j5), said memory (12) and said communication means (13) cooperating with said processing unit (11), the data memory (12) storing the value of an identifier (ID, IDm, IDa) dedicated to the first communicating electronic device (10) and a register (RH) arranged to include the current value (IDHc) of an identifier (IDH) of a communicating electronic device (d2, h3) acting as a cluster head (C1, C2), said method (P100) including a step (123) for sending a service message (MS) to the device acting as cluster head, and being **characterized in that** it includes:
- a step (125) prior to the sending (123) of the service message (MS) for generating and sending, via the first communication means (13), a verification message (MAS) for belonging to the cluster, said message encoding:
i. the value (MAS-1) of the identifier of a second communicating electronic device as identifier of the communicating electronic device receiving said verification message (MAS) for belonging to the cluster;
ii. the value (MAS-2) of the identifier of the first device as identifier of the communicating electronic device that is the source of said verification message (MAS) for belonging to said cluster ;
- a step (126), carried out if and only if a message (MAA) acknowledging receipt of said message verifying belonging to the cluster is received before the expiration of a maximum waiting time determined from the sending of the message (MAS) verifying belonging to the cluster, to decode said message (MAA) acknowledging receipt and deduce therefrom:
i. the value (MAA-2) of the identifier of the device receiving said message (MAA) acknowledging receipt of the message (MAS) verifying belonging to the cluster;
ii. the value (MAA-1) of the identifier of the source device of said message (MAA) acknowledging receipt of the message (MAS) verifying belonging to the cluster;
the step (123) for sending a service message (MS) only being carried out if (126-y):
- the deduced value (MAA-2) of the identifier of the device receiving the message (MAA) acknowledging receipt of the message (MAS) verifying belonging to the cluster is equal to that of the identifier of the first communicating electronic device;
- the deduced value (MAA-1) of the identifier of the source device of said message (MAA) acknowledging receipt of the message (MAS) verifying belonging to the cluster is equal to that of the identifier of the second communicating electronic device.

2. The method according to the preceding claim, wherein the step prior to sending the service message (MS) for generating and sending, via the first communication means (13), a message (MAS) verifying belonging to the cluster is only carried out (124-y) if a test step (124) shows that the device is affiliated with the cluster (C1, C2).

3. The method (P100) according to either one of the preceding claims, including:
- a step (201) for receiving a message (MAR) requesting affiliation generated and sent by a third communicating electronic device (c5, i5) requesting an affiliation with a cluster (C1, C2), said affiliation request message (MAR) including the value of the identifier (IDa) of said third device (c5, i5) requesting an affiliation;
- a step (202) for decoding said affiliation request message (MAR) and deducing the value therefrom of said identifier (IDa) of said third device requesting affiliation;
- a step (204) for generating a message (MAA) acknowledging receipt of the affiliation request consisting of encoding (MAA-1, MAA-2, MAA-3), within said message (MAA):
i. the value of the identifier (ID) of the first device as identifier of the source device of said message (MAA) acknowledging receipt of the affiliation request,
ii. the value of the identifier (IDa) of the third device requesting affiliation as identifier of the device receiving said message (MAA) acknowledging receipt of the affiliation request,
iii. the current value (IDHc) of the identifier (IDH) of a fourth communicating electronic device acting as a cluster head, said value (IDHc) being read in the register (RH),
- a step (205) for triggering the sending, by the first communication means (13), of the message (MAA) acknowledging receipt of the affiliation request.

4. The method (P100) according to the preceding claim, wherein the step (204) for generating a message (MAA) acknowledging receipt of the affiliation request further consists of encoding (MAA-6, MAA-7) a value (CHc1, CHc2) describing a capacity (CH1, CH2) of the fourth communicating electronic device (d2, h3) acting as cluster head (C1, C2) to perform a service, said value being recorded in the register (RH) further storing the current value (IDHc) of the identifier (IDH) of said fourth communicating electronic device (d2, h3) acting as cluster head (C1, C2).

5. The method (P100) according to any one of the preceding claims, wherein the step (205) for triggering the sending, by the first communication means (13), of the message (MAA) acknowledging receipt of the affiliation request is only performed if (203-a) the data memory (12) stores a register (RH) including a current value (IDHc) of an identifier (IDH) of a communicating electronic device (d2, h3) acting as cluster head (C1, C2).

6. The method (P100) according to any one of the preceding claims, including:
- a step for generating (211) an affiliation request message (MAR) consisting of encoding (MAR-1) the value of the identifier (ID, IDa) of the first device (c5, i5) as identifier of a device requesting affiliation with a cluster;
- a step (212) for initiating the sending, by the first communication means (13), of said affiliation request message (MAR);
- a step (213) for receiving, by the communication means (13), a message (MAA) generated and sent by a fifth device (10i) acknowledging receipt of the affiliation request message (MAR);
- a step (214), carried out if and only if (213, 213-y) said message (MAA), acknowledging receipt of the affiliation request message (MAR), is received before the expiration of a maximum waiting time determined from the sending of said affiliation request message (MAR), to decode said message (MAA) acknowledging receipt of the affiliation request message and to deduce therefrom:
i. the value of the identifier (MAA-2, IDa) of the device receiving said message (MAA) acknowledging receipt of an affiliation request;
ii. the value of the identifier (MAA-3, IDH) of a sixth communicating electronic device acting as cluster head to which the fifth source device of said message (MAA) acknowledging receipt of an affiliation request belongs;
- a step (215), carried out if and only if said deduced value (MAA-2) of the identifier of the receiving device is equal to that of the value of the identifier (ID) of the first device requesting affiliation, to record, in the register (RH), the deduced value of the identifier (IDH) of the sixth communicating electronic device acting as cluster head, as current value (IDHc) of the identifier of the device acting as cluster head.

7. The method (P100) according to the preceding claim, wherein:
- the step (214) for decoding the message (MAA) acknowledging receipt of the affiliation request message further consists of deducing (MAA-1), from said message (MAA), the value of the identifier (IDm) of the fifth communicating electronic device that is the source of said message (MAA);
- the step (215) for updating the register (RH) further consists of recording said deduced identifier value therein as identifier of a communicating electronic device on an uplink route (Ru) separating the first communicating electronic device requesting affiliation from the sixth communicating electronic device acting as cluster head.

8. The method (P100) according to any one of the preceding claims, including a step prior to the step for sending a service message (MS) intended for device acting as cluster head to generate (123a) and initiate (123), via the first communication means (13), the sending of the service message (MS) intended for the communicating electronic device whose identifier value (IDH) is stored, as current identifier value (IDHc) of the communicating electronic device acting as cluster head, by the register (RH).

9. A computer program (P) including a plurality of program instructions, which, when they are:
- stored beforehand in a program memory (14) of such an electronic device (10) further including a processing unit (11), first communication means (13) ensuring wireless nearby communication with any other electronic device (10i) situated within the communication range, a data memory (12) saving the value of an identifier (ID) dedicated to the device and a register (RH) to include the current value of an identifier of a device acting as cluster head, said memories (12, 14) and said first communication means (13) cooperating with said processing unit (11);
- executed or interpreted by said processing unit (11),
causes the implementation of an affiliation method (P100) according to any one of the preceding claims.

10. An electronic device (10) including a processing unit (11), a data memory (12), a program memory (14), first communication means (13) providing wireless nearby communication with any other electronic device (10i) situated within the communication range, said memories (12, 14) and said first communication means (13) cooperating with said processing unit (11), the data memory (12) including the value of an identifier (ID) dedicated to the device and a register (RH) to include the current value of an identifier of a device acting as cluster head, said device (10) being **characterized in that** it includes, in the program memory (14), the instructions of a program (P) according to the preceding claim.

11. A system including a plurality of such communicating electronic devices (10, 10i) according to the preceding claim.

12. The system according to the preceding claim, including a plurality of containers of goods, solid, fluid or liquid merchandise, said containers respectively cooperating with the communicating electronic devices (10, 10i), the latter each including a sensor (15) cooperating with the processing unit (11) to measure and collect a property related to the internal and/or external environment of said containers.
